(19) Europäisches Patentamt / European Patent Office / Office européen des brevets

(11) **EP 1 818 922 A1**

(12) **EUROPEAN PATENT APPLICATION**
published in accordance with Art. 158(3) EPC

(43) Date of publication:
**15.08.2007 Bulletin 2007/33**

(51) Int Cl.:
*G11B 11/105* (2006.01)    *G11B 7/24* (2006.01)
*G11B 7/26* (2006.01)

(21) Application number: **04801654.7**

(22) Date of filing: **03.12.2004**

(86) International application number:
**PCT/JP2004/018434**

(87) International publication number:
**WO 2006/059399 (08.06.2006 Gazette 2006/23)**

(84) Designated Contracting States:
**DE FR GB**

(71) Applicant: **Fujitsu Ltd.**
**Kawasaki-shi, Kanagawa 211-8588 (JP)**

(72) Inventor: **AOYAMA, Nobuhide,**
**c/o FUJITSU LIMITED,**
**Kawasaki-shi,**
**Kanagaw a 2118588 (JP)**

(74) Representative: **Stebbing, Timothy Charles**
**Haseltine Lake**
**5th Floor Lincoln House**
**300 High Holborn**
**London, WC1V 7JH (GB)**

(54) **OPTICAL STORAGE MEDIUM, OPTICAL STORAGE MEDIUM MANUFACTURING METHOD, AND OPTICAL STORAGE**

(57)     Recording density is improved by performing anneal processing on an optical storage medium (4). Anneal management information (40) is recorded in the optical storage medium (4) without performing anneal processing, and is provided to a user. Anneal processing is performed and high density recording and reproducing is enabled by the effect of annealing on an area between recording tracks based on the choice of the user. Since initialization processing (anneal processing) by a storage medium manufacturer can be omitted, the medium can be provided at low price. Also a deep groove medium need not be used because of the effect of annealing, thereby the manufacturing of a substrate used for a medium is easy. It is preferable that advertisement information is recorded in a pit section (4-1) as content information, so that the content can be reproduced automatically during anneal processing, and the medium price can be reduced due to advertisement fees.

FIG. 3

EP 1 818 922 A1

## Description

CROSS-REFERENCE TO RELATED APPLICATIONS

This application is a continuation of international application PCT/JP2004/018434, filed on December 3, 2004.

TECHNICAL FIELD

The present invention relates to an optical storage medium, manufacturing method for an optical storage medium, and optical storage device for optically recording and reproducing by an optical head, and more particularly to an optical storage medium, manufacturing method for an optical storage medium, and optical storage device for recording and reproducing data to/from each land or groove recording layer separated by the grooves or the lands.

BACKGROUND ART

Competition for higher densities of information recording media is heating up, and the capacity of each recording medium is increasing accordingly. On the other hand, competition in price of information recording medium is also heating up, and price is progressively decreasing. Since capacity-per-recording medium is increasing, the time required for certifying (quantity assurance) a medium and initialization thereof is increasing, and the manufacturing cost, including quantity assurance, tends to increase.

For example, in a magneto-optical disk (MO Disk), a recording capacity approximately 10 times a conventional mini disk is implemented using substantially the same optical system by using DWDD (Domain Wall Displacement Detection). In order to further increase density using DWDD, land - groove recording using a deep groove substrate and implementing narrow tracks by annealing the side walls of lands and grooves and preventing the interference of recording data between tracks has been proposed (e.g. "15 Gbit/in2 recording on a DWDD disk using a land/groove substrate with a red laser enabled by a side-wall-annealing process", SPIE (The International Society for Optical Engineering), Vol. 5069, (2003 SPIE), and Japanese Patent Application Laid-Open No. H11-273170).

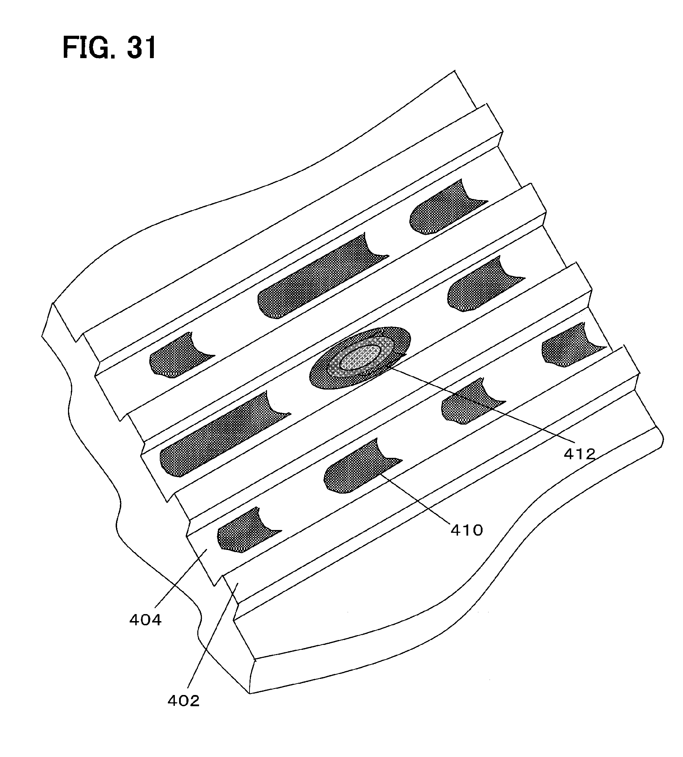

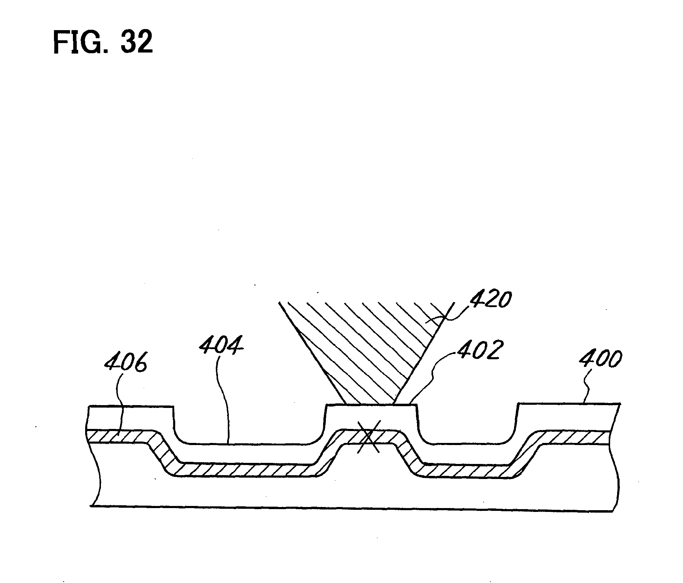

In such a magnetic domain wall displacement detection, a magnetic domain wall is displaced not only in the track direction but also in the track crossing direction. This shift of the magnetic domain in the track crossing direction causes data interference between tracks. This will be described concretely with reference to Fig. 31 and Fig. 32. As Fig. 31 shows, grooves 404 separated by lands 402 are formed on the MO substrate 400. Magneto-optical recording marks 410 are recorded on the tracks of the grooves 404 by a beam spot 412, and in the same way, data is reproduced by the beam spot 412.

As Fig. 32 shows, the recording layer 406 is uniformly formed on the substrate 400 throughout the lands 402 and grooves 404. In anneal processing, a laser light 420 with high intensity is emitted onto a land 402, for example, thereby cutting the recording layer 406 inside the substrate 400 or weakening the recording functions of the recording layer 406. In the same way, by increasing the height between a land 402 and a groove 404, that is making a groove deep, the interference between tracks can be prevented.

However in the case of a land-groove recording method using a deep groove substrate, it is difficult to form deep grooves to satisfy the characteristics of both lands and grooves, because the track pitch becomes increasingly smaller.

On the other hand, when anneal processing is performed on lands and side walls, focusing on the recording medium and the tracking to the side wall of each track are required. Therefore it takes an enormous amount of time (e.g. 15 minutes per medium) to perform anneal processing on an entire face of the recording medium having tens of thousands of tracks, and the manufacturing cost increases considerably since this processing is performed by the manufacturer of the recording medium.

DISCLOSURE OF THE INVENTION

With the foregoing in view, it is an object of the present invention to provide an optical storage medium, a manufacturing method for an optical storage medium, and an optical storage device which allows high density recording without performing anneal processing by the manufacturer of the medium.

It is another object of the present invention to provide an optical storage medium, a manufacturing method for an optical storage medium, and an optical storage device for modifying a provided storage medium, which is not anneal-processed, into a storage medium which allows high density recording.

It is still another object of the present invention to provide an optical storage medium, a manufacturing method for an optical storage medium, and an optical storage device for decreasing the manufacturing cost of a high density recording medium.

To achieve these objects, the optical storage medium of the present invention is an optical storage medium for recording and reproducing at least by light, having a substrate that has grooves and lands constructed by a change of physical form, and a recording layer formed on the substrate. And the groove or land has rewritable anneal management information indicating whether anneal processing for separating the recording layer by the groove or land by irradiating the light and increasing the recording density has been performed.

In the optical storage medium of the present invention, it is preferable that the anneal management information is formed in a pit shape in the groove or land.

In the optical storage medium of the present invention, it is also preferable that the anneal management information is formed in the recording layer of the groove or land.

It is also preferable that the optical storage medium of the present invention further has a system area, where the anneal management information is formed, and a user area.

In the optical storage medium of the present invention, it is also preferable that the recording layer is constructed by a magneto-optical layer.

In the optical storage medium of the present invention, it is also preferable that pit-shaped content is formed in an anneal area of the land or groove.

A manufacturing method for an optical storage medium according to the present invention has a step of forming a substrate that has grooves and lands constructed by a change of physical form, a step of forming a recording layer on the substrate, and a step of rewritably forming, in the groove or land, anneal management information indicating whether anneal processing for separating the recording layer by the groove or land by irradiating the light and increasing the recording density has been performed.

In the manufacturing method for an optical storage medium of the present invention, it is preferable that the step of forming the anneal management information has a step of forming the anneal management information in a pit shape in the groove or land.

In the manufacturing method for an optical storage medium of the present invention, it is also preferable that the step of forming the anneal management information has a step of forming the anneal management information in the recording layer of the groove or land.

In the manufacturing method for an optical storage medium of the present invention, it is also preferable that the step of forming the substrate further has a step of forming pit-shaped content in an anneal area of the land or groove.

An optical storage device according to the present invention has: an optical head for reading an optical storage medium which has grooves and lands constructed by a change of physical form, and a recording layer; and a controller for executing anneal processing for separating the recording layer by the groove or land by irradiating light and increasing the recording density, according to anneal management information indicating whether anneal processing has been performed, read from the optical storage medium.

In the optical storage device of the present invention, it is preferable that the optical head reads the anneal management information formed in a pit shape in the groove or land.

In the optical storage device of the present invention, it is also preferable that the optical head reads the anneal management information formed in the recording layer of the groove or land.

In the optical storage device of the present invention, it is also preferable that the optical head reads the optical storage medium having a system area, where the anneal management information is formed, and a user area, and the controller perform anneal processing on the user area according to the anneal management information.

In the optical storage device of the present invention, it is preferable that the recording layer of the optical storage medium is constructed by a magneto-optical layer.

In the optical storage device of the present invention, it is also preferable that the optical head reads the pit-shaped content formed in an anneal area of the land and groove when the anneal processing is performed.

In the optical storage device of the present invention, it is also preferable that the controller updates the anneal management information of the optical storage medium after the anneal processing.

In the optical storage device of the present invention, it is also preferable that the controller determines the recording density of a user area of the optical storage medium by referring to the anneal management information of the optical storage medium.

In the optical storage device of the present invention, it is also preferable that the controller records/reproduces data in the user area of the optical storage medium at a relatively high density when the anneal management information of the optical storage medium indicates that annealing has been performed, and records/reproduces data in the user area of the optical storage medium at a relatively low density when the anneal management information of the optical storage medium indicates that annealing has not been performed.

In the optical storage device of the present invention, it is also preferable that the controller executes anneal processing of the user area of the optical storage medium when the anneal management information of the optical storage medium indicates that annealing has not been performed.

BRIEF DESCRIPTION OF THE DRAWINGS

Fig. 1 is a cross-sectional view depicting a layer configuration of an optical storage medium according to an embodiment of the present invention;
Fig. 2 is a diagram depicting the relationship of a pit and MO mark in the medium in Fig. 1;
Fig. 3 is a diagram depicting an anneal management area in the medium in Fig. 1;
Fig. 4 is a table showing the recording methods in the anneal management area in Fig. 3;
Fig. 5 is a table showing the management information of the anneal management area in Fig. 3;
Fig. 6 is a table showing another management information of the annual management area in Fig. 3;

Fig. 7 is a block diagram depicting an entire optical storage device according to an embodiment of the present invention;

Fig. 8 is a block diagram depicting a signal processing system of the drive in Fig. 7;

Fig. 9 is a diagram depicting the relationship of the arrangement of a detector and generation signal in Fig. 8;

Fig. 10 is a block diagram depicting a recording density change system according to the first embodiment of the present invention;

Fig. 11 is a flow chart depicting the recording density change processing according to the first embodiment of the present invention;

Fig. 12 is a diagram depicting the relationship of the power of irradiation light and the magnetic field strength to be applied in Fig. 11;

Fig. 13 is a graph depicting the relationship of recording peak power and MO jitter;

Fig. 14 is a graph depicting the relationship between pit reproducing power and MO jitter;

Fig. 15 is a flow chart depicting a recording processing of the anneal management information in Fig. 11;

Fig. 16 is a diagram depicting another recording processing of the anneal management information in Fig. 11;

Fig. 17 is a flow chart depicting another recording density change processing according to the first embodiment of the present invention;

Fig. 18 is a flow chart depicting the processing of the recording density change method according to the second embodiment of the present invention;

Fig. 19 shows a content management table used for Fig. 18;

Fig. 20 is a flow chart depicting another processing of the recording density change method according to the second embodiment of the present invention;

Fig. 21 is a flow chart depicting still another processing of the recording density change method according to the second embodiment of the present invention;

Fig. 22 is a table showing the configuration of the anneal management area in Fig. 21;

Fig. 23 is a diagram depicting the anneal management area according to another embodiment of the present invention;

Fig. 24 is a diagram depicting a configuration of a track according to another embodiment of the present invention;

Fig. 25 is a diagram depicting a manufacturing method for the optical storage medium according to the first embodiment of the present invention;

Fig. 26 is a diagram depicting a manufacturing method for the optical storage medium according to the second embodiment of the present invention;

Fig. 27 is a diagram depicting a configuration of a film of an optical storage medium according to another embodiment of the present invention;

Fig. 28 is a diagram depicting the relationship of pits and phase change marks in the medium in Fig. 27;

Fig. 29 is a diagram depicting the relationship of power of irradiation light and a phase change mark in Fig. 27;

Fig. 30 is a flow chart depicting a processing in a recording density change method according to the third embodiment of the present invention;

Fig. 31 is a diagram depicting a configuration of a conventional optical storage medium; and

Fig. 32 is a diagram depicting a conventional anneal processing.

## PREFERED EMBODIMENTS OF THE INVENTION

Embodiments of the present invention will now be described in the sequence of an optical storage medium, optical storage device, first embodiment of recording density change method, second embodiment thereof, other anneal processing, manufacturing method for an optical storage medium, recording density change method for another optical storage medium, and other embodiments. Optical storage medium

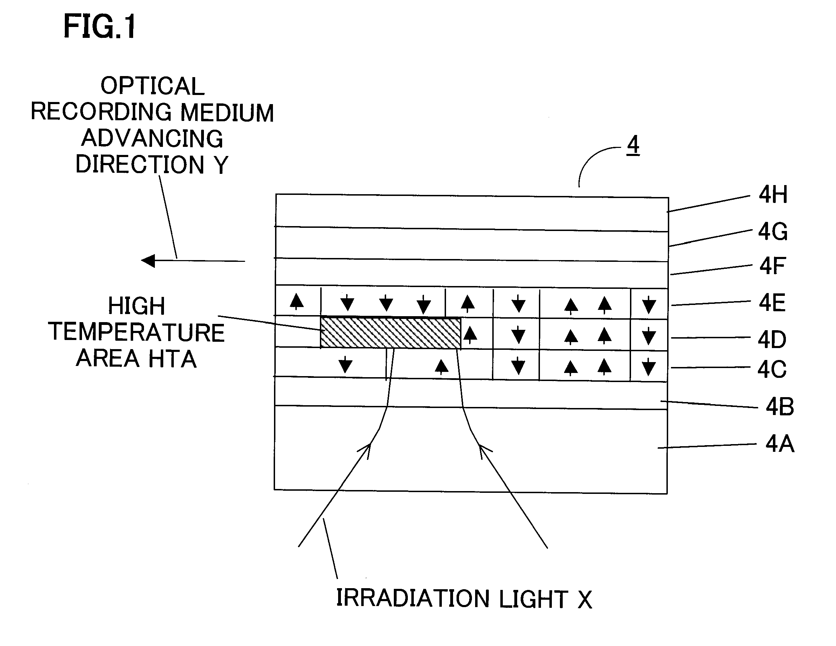

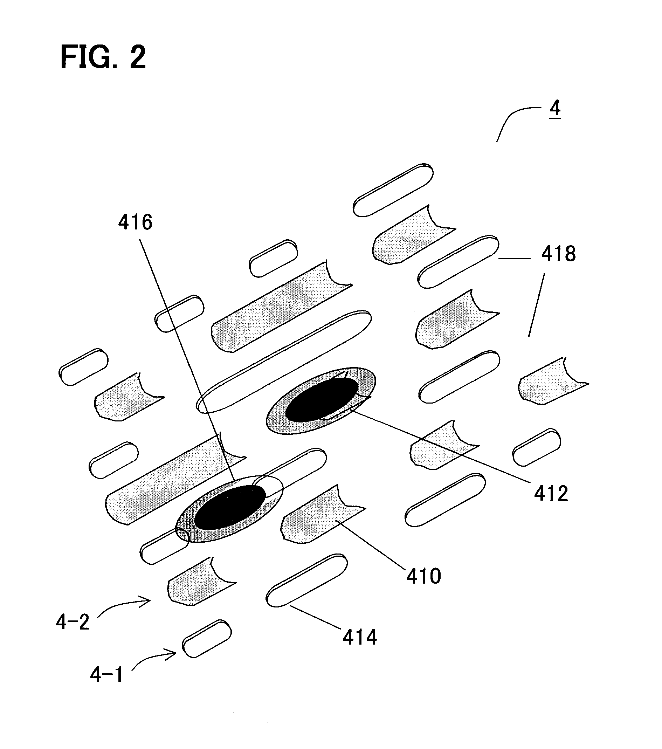

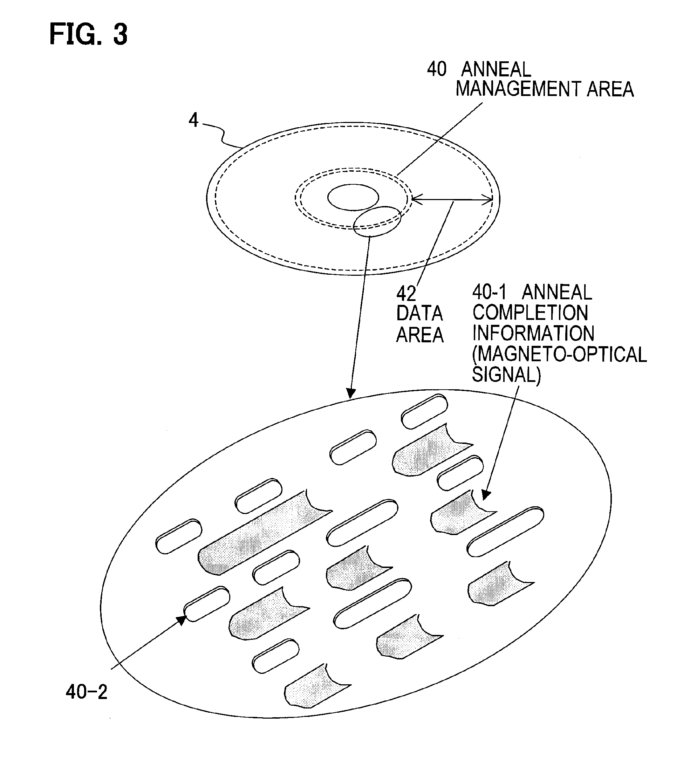

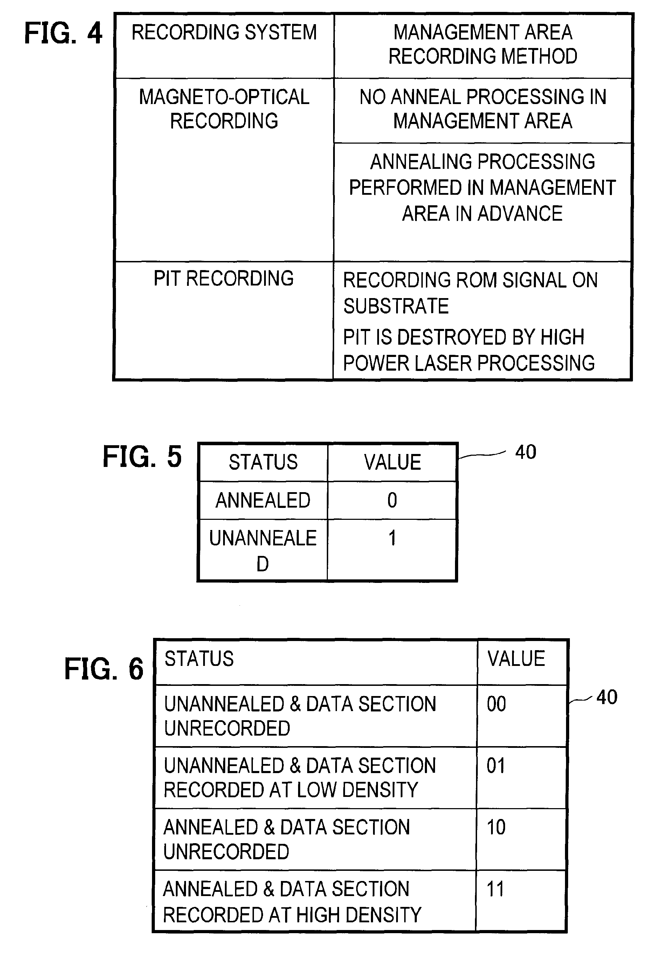

Fig. 1 is a cross-sectional view depicting a layer configuration of an optical storage medium according to an embodiment of the present invention, Fig. 2 is a diagram depicting the relationship of a pit and MO mark in the medium in Fig. 1, Fig. 3 is a diagram depicting an anneal management area in the medium in Fig. 1, Fig. 4 is a table showing the recording methods in the anneal management area in Fig. 3, Fig. 5 is a table showing the management information of the anneal management area in Fig. 3, and Fig. 6 is a table showing another management information of the anneal management area in Fig. 3.

Fig. 1 shows a layer configuration of the above mentioned DWDD disk as an optical storage medium. As Fig. 1 shows, a DWDD disk 4 has an optically transparent plastic substrate 4A, on which a dielectric layer 4B formed with SiNx, for example, a reproducing layer 4C formed with GdFeCo, a switching layer 4D formed with TbFeCo having a low Curie temperature, a recording layer 4E formed with TbFeCo having a high Curie temperature, a dielectric layer 4F formed with SiNx, for example, and a metal protective layer 4G formed with Al, for example, are normally sequentially formed by a sputtering method.

A control layer for adjusting the displacement of a magnetic domain wall may be separately formed between this reproducing layer 4C and the switching layer 4D. Normally an ultraviolet hardening type resin layer 4H is formed on the metal protective layer 4G by a spin coat method, and the resin layer 4H is stabilized by the irradiation of ultraviolet after spin coating. A physical structure of lands (including pits) and grooves is formed on this plastic substrate 4A using a later mentioned stamper method.

In the case of DWDD disk 4, when irradiation light X is emitted, a high temperature area HTA is formed in the switching layer 4D in a recording medium advancing direction Y, magnetization transition is generated from the reproducing layer 4C to the recording layer 4E (recording), and magnetization transition is generated from the recording layer 4E to the reproducing layer 4C (reading), and recording/reproducing becomes possible at a density higher than the resolution of the light.

Fig. 2 is a diagram depicting the configuration of lands and grooves of an information storage medium substrate using DWDD in Fig. 1, and shows the relationship between a pit and MO mark in the information storage medium. For recording/reproducing of an MO mark 410, a pit 414 of a pit string 4-1 plays a role of a guide groove (land). In other words, this example shows a case of forming a land by the information pit 414 and recording an MO signal string 4-2 in the groove.

In this example, the pit information is also reproduced while performing anneal processing simultaneously. During this reproducing the pit information, a beam spot 416 is condensed to approximately a center of the pit string 4-1. During recording or reproducing the MO signal 410, a beam spot 412 is condensed to approximately a center between the pit strings 4-1. Anneal processing area 418 is the pit string 4-1 between the MO signal strings 4-2.

In this example, a substrate having a disk shape of which diameter is φ90 mm, track pitch (space of pit strings 4-1) 1 μm, pit width 0.35 μm and pit depth 90 nm, is used. In Fig. 2, an MO mark is recorded only in a groove section, but may be recorded in a land section, or in both a land and groove section. Also as mentioned later, lands may be formed instead of pits.

Fig. 3 is a diagram depicting an anneal management area of the storage medium 4 in Fig. 2, Fig. 4 is a table showing the recording methods of the anneal management area in Fig. 3, and Fig. 5 and Fig. 6 are tables showing the relationship between the status of the anneal processing and the data of the management area in Fig. 3. In the case of the example in Fig. 3, an anneal management area 40 is formed in a system area (stores specifications of the disk and area information of the disk, among others) created in the innermost circumference of a disk 4. Therefore an area other than the system area in the innermost circumference side is open to the user as a data area 42.

As Fig. 3 shows, the anneal management area 40 is for storing management information indicting whether anneal processing has or has not been performed on the user area 42, and information indicating "unannealed" is recorded before shipment at the medium manufacturer. This anneal management area 40 is recorded by a magneto-optical signal 40-1 or by a pit signal 40-2.

In other words, as Fig. 4 shows, a method of recording by magneto-optical recording has two cases: recording the system area including this management area without the anneal processing, and recording it after performing the anneal processing. When the medium manufacturer records management information without performing the anneal processing, this area is recorded at low density. When the medium manufacturer records the management information after performing the anneal processing, this area is recorded at high density.

In the case of pit recording, the management information is recorded as ROM signals by forming pits in the substrate 4. When the anneal processing is performed, the pits of the management information are destroyed by high power laser processing, which indicates that the anneal processing has been performed. In both cases, the user area 42 is not anneal processed before shipment of the medium.

For the anneal management information, "1" is stored when the anneal processing has been performed, and "0" is stored when the anneal processing has not been performed, as shown in Fig. 5. In the example in Fig. 6, the data recording status of the user area 42 is incorporated with the management information. In other words, "00" is stored if the anneal processing has not been performed, and the data section has not been recorded, "01" if anneal processing has not been performed and the data section has been recorded at low density, "10" if anneal processing has been performed and the data section has not been recorded, and "11" if anneal processing has been performed and the data section has been recorded at high density.

In this way, according to the present invention, an optical storage medium 4 is provided by the medium manufacturer without performing the anneal processing, so that the user can decide whether to execute the anneal processing or not. Therefore the anneal management area 40 is formed in the optical storage medium 4, and the information of the management area 40 is updated if the anneal processing is performed, so that the optical storage device can recognize whether anneal processing has been performed or not in order to judge whether recording is at high density or low density.

Optical storage device

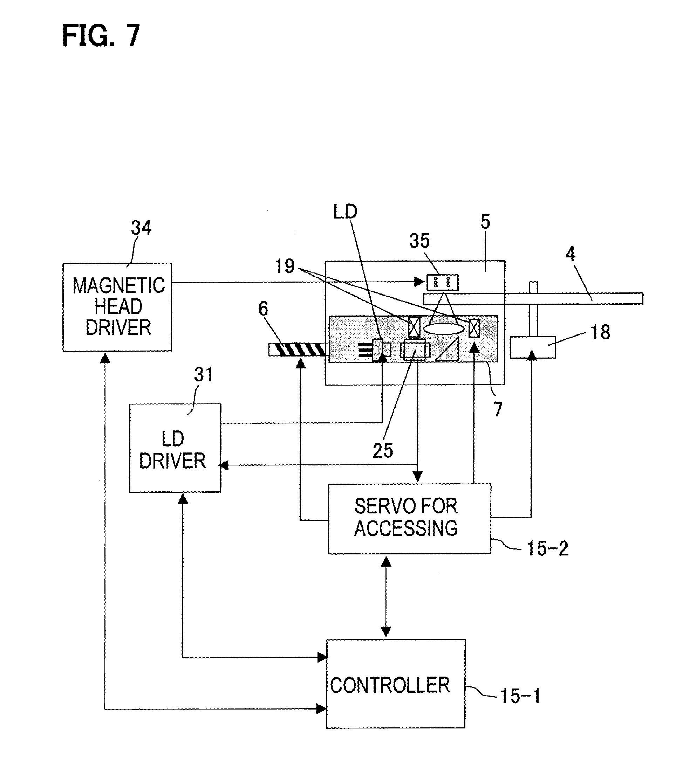

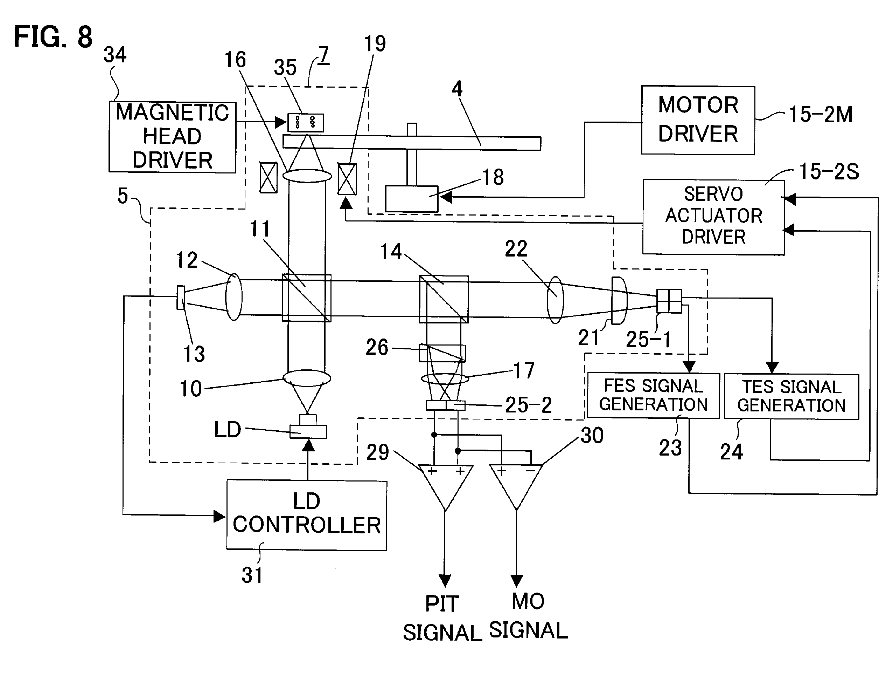

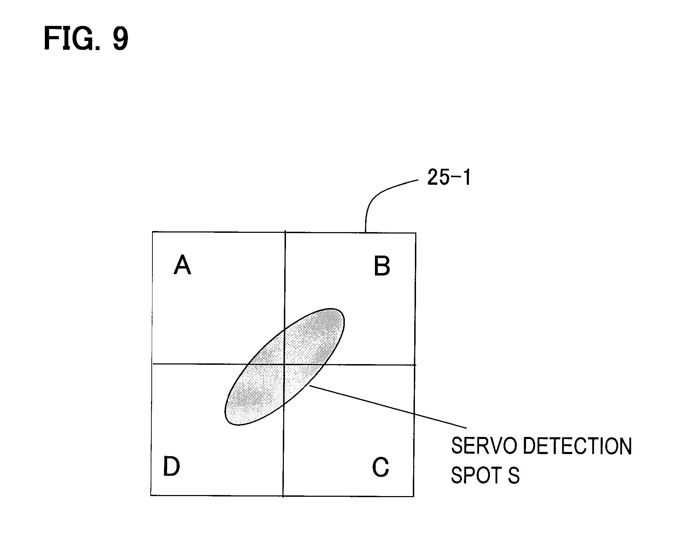

Now an optical storage deice according to the present invention will be described. Fig. 7 is a block diagram depicting an entire optical storage device according to an embodiment of the present invention, Fig. 8 is a block diagram depicting a signal processing system of the drive in Fig. 7, and Fig. 9 is a diagram depicting the relationship between the arrangement of a detector and generation signal in Fig. 8.

Fig. 7 shows a magneto-optical disk drive as the optical storage device. As Fig. 7 shows, a motor 18 rotates an optical information recording medium (MO disk) 4. Normally the MO disk 4 is a removable medium described in Fig. 1 to Fig. 3, and is inserted through the insertion slot of a drive, which is not illustrated. An optical pickup 5 has a magnetic head 35 and an optical head 7, which are disposed sandwiching the optical information recording medium 4.

The optical pickup 5 is moved by a track actuator 6, such as a ball screw feed mechanism, and can access any position of the optical information recording medium 4 in the radius direction. An LD (Laser Diode) driver 31, for driving a laser diode LD of the optical head 7, and a magnetic head driver 34, for driving the magnetic head 35 of the optical pickup 5, are also installed.

A servo controller for accessing 15-2 servo-controls the track actuator 6, the motor 18 and a focus actuator 19 of the optical head 7 by the output from the optical head 7. A controller 15-1 operates the LD driver 31, the magnetic head driver 34 and the servo controller for accessing 15-2, so as to record/reproduce information.

The magnetic head 7 will now be described in detail with reference to Fig. 8. Lights emitted from the laser diode LD with an oscillation wavelength of about λ = 660 nm become parallel lights by a collimator lens 10 and condense onto the information recording medium 4 by an objective lends 16 via a polarization beam splitter 11. Here the divergent lights emitted from the laser diode LD become parallel lights with a numerical aperture of about NA = 0.18 by the collimator lens 10, and these lights, with an NA = 0.15, are used as an effective component of the objective lens 16. The objective lens 16 has an NA = 0.55, and a beam spot, of which diameter is about $\phi$ = 1 μm, is formed on a recording film of the optical recording medium 4, of which thickness is about 1.2 mm.

The emitting lights from the laser diode LD are linearly polarized lights, and the characteristics of the polarization beam splitter 11 are that the P polarization component is transmitted 70% and reflected 30%, and the S polarization component is reflected approximately 100%. Of the lights that entered the polarization beam splitter 11 as P polarized lights, about 30% are reflected and condensed on a detector for APC (Auto Power Control) 13 by a condenser lens 12.

The LD controller (driver) 31 adjusts the emission power of the laser diode LD by negative feedback from an output signal from the detector for APC 13. The lights condensed on the optical information recording medium 4, on the other hand, are reflected as lights having an approximately ±0.8 degree Kerr rotation angle, according to the direction of magnetization of the reproducing layer.

These reflected lights enter the polarization beam splitter 11 via the objective lens 16 again, and of these lights about 30% of the P polarization component and about 100% of the S polarization component are reflected. In the reflected lights, about 60% of the P polarization component and about 100% of the S polarization component are reflected by a polarization beam splitter 14.

The reflected lights are separated into two polarization components by a Wollaston prism 26, and are condensed onto a two-division detector 25-2 via a condensing lens 17. A difference computing unit 30 computes the difference of each output of the two-division detector 25-2, and detects the MO signals, and an addition computing unit 29 computes the addition of each output of the two-division detector 25-2 and detects the pit signals.

On the other hand, of the lights which entered the polarization beam splitter 14, about 40% of the P polarization component is transmitted and condensed on a servo detector 25-1 of which area is divided into four, via a condenser lens 22 and cylindrical surface lens 21. Fig. 9 shows a diagram depicting the configuration of the servo detector 25-1. The servo detector 25-1 is divided into four areas: A to D, and an FES signal generation circuit 23 detects a focusing error signal FES as follows using an output signal by a servo detection spot light S, based on an astigmatism method:

$$FES = (A + C) - (B + D)$$

A TES signal generation circuit 24 detects a tracking error signal TES as follows based on a push-pull method:

$$TES = (A + D) - (B + C)$$

Using the FES signal and the TES signal, a servo actuator driver 15-2S moves the object lens actuator 19 for focusing and tracking. A motor driver 15-2M rotates and drives the spindle motor 18 at a specified velocity.

The above configuration is an example of an embodiment method of the present invention, and for focusing, a spot size detection method or Foucault method can also be used. For tracking, a three beam method, differential push-pull method, heterodyne method and phase difference method, for example, can also be used. Also in the above configuration, it is assumed that the disk type information recording medium is used considering rotation by the spindle motor, but the present invention can be implemented by a tape medium having tracks equivalent to guide grooves as well.

First embodiment of recording density change method

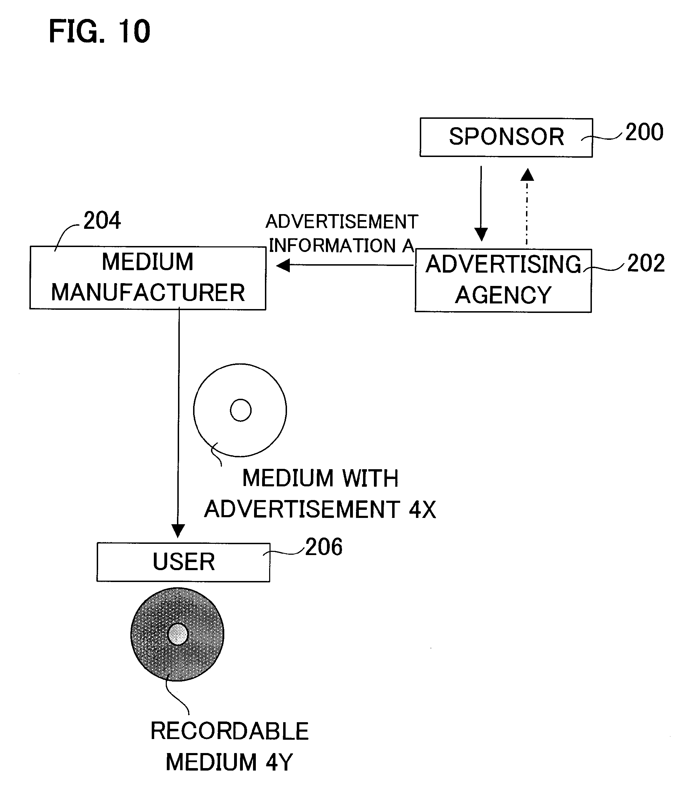

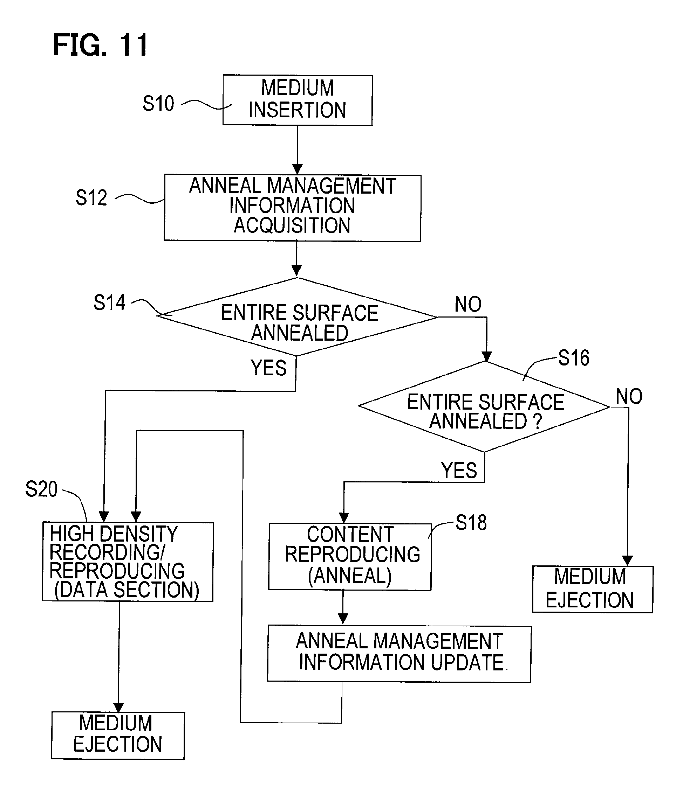

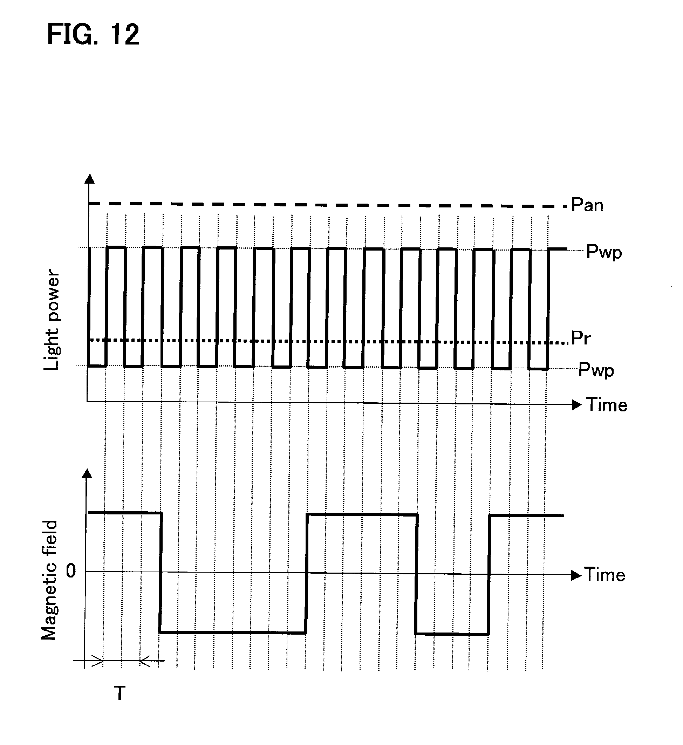

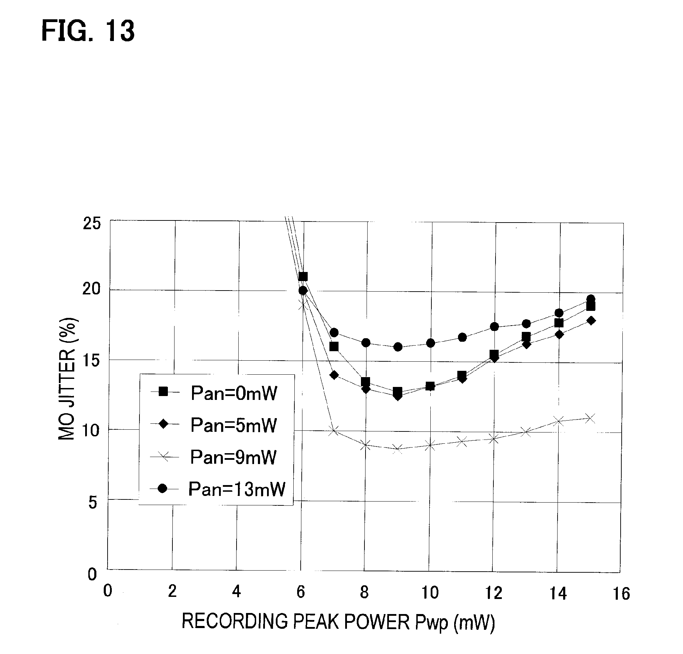

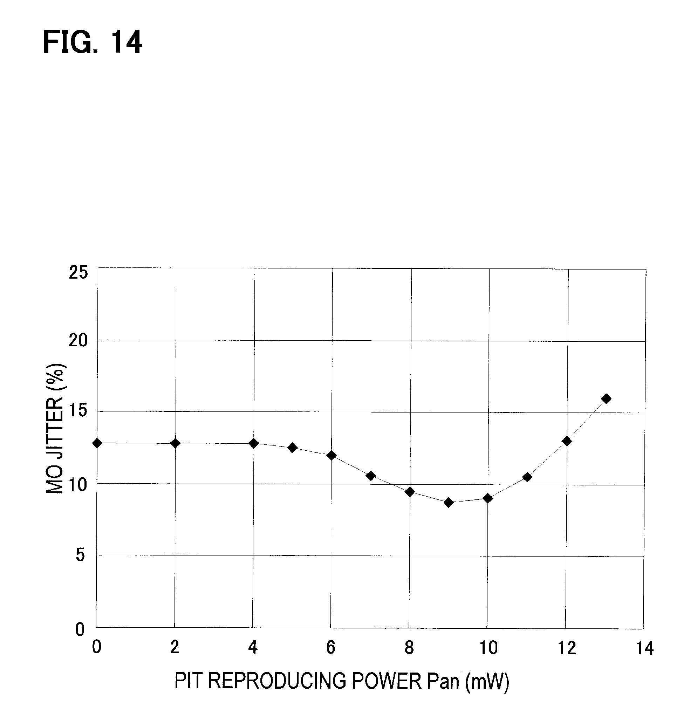

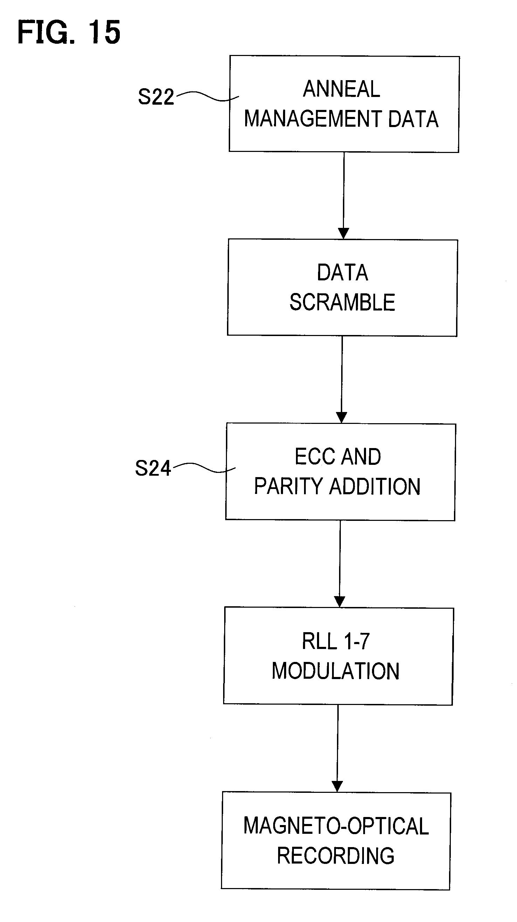

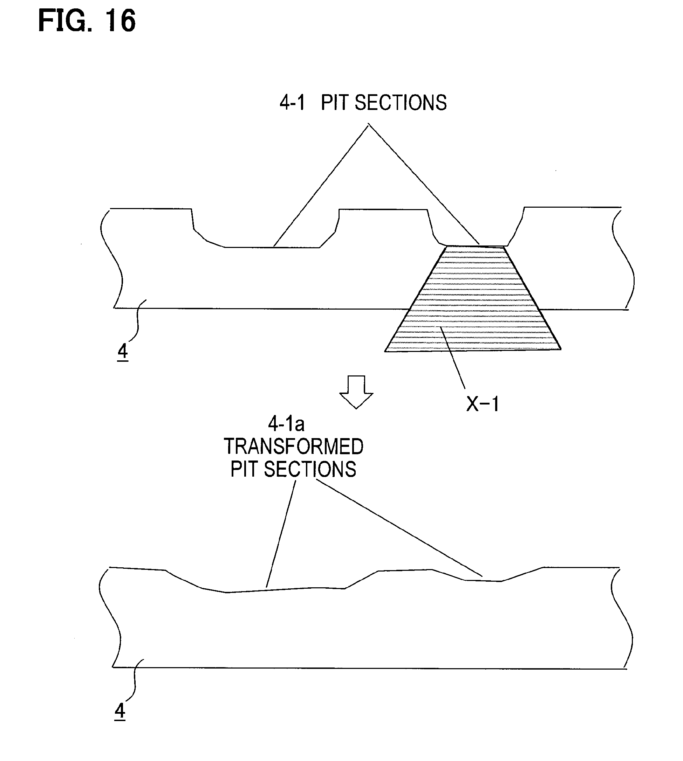

Fig. 10 is a block diagram depicting a recording density change system according to the first embodiment of the present invention, Fig. 11 is a flow chart depicting the recording density change processing according to the first embodiment of the present invention, Fig. 12 is a diagram depicting the relationship between the power of irradiation light and the magnetic field strength to be applied in Fig. 11, Fig. 13 is a graph depicting the relationship between the recording peak power and MO jitter, Fig. 14 is a graph depicting the relationship between the pit reproducing power and MO jitter, Fig. 15 is a flow chart depicting a recording processing of the anneal management information in Fig. 11, and Fig. 16 is a diagram depicting another recording processing of the anneal management information in Fig. 11.

Fig. 10 shows a configuration of a recording density change system based on the distribution of an information recording medium with an advertisement as the first embodiment of the present invention. As Fig. 10 shows, when a sponsor 200 requests, an advertising agency 202 sends advertisement information A to a medium manufacturer 204. The medium manufacturer 204 records the advertisement information form in the guide groove section 4-1 of the information recording medium 4, and records the anneal management information in an anneal management area 40 as phase pit information, as mentioned later. In this status, a user area 42 of the medium 4 has not been annealed. Therefore high density recording/reproducing cannot be performed.

The medium 4X, on which the advertisement information is recorded, is provided to the market, and is purchased by a user 206. The price of this information medium 4 is decreased by an advertisement fee from the sponsor 200, and the user 206 can purchase the optical information medium 4 at low price.

If the user 206 performs the anneal processing on the purchased medium 4X using the magneto-optical recording device described in Fig. 7, this medium 4X can be used as a rewritable medium 4Y which can be recorded at high density. If the anneal processing is performed at this time, the phase pit information is reproduced by laser irradiation in the anneal processing. In other words, the advertisement information intended by the sponsor 200 can be received by the user 206.

In this way, the user 206 can purchase an inexpensive high density recording medium 4X, and the medium manufacturer 204 can provide the medium at low price since manufacturing cost can be decreased because the anneal processing is not performed. Also the advertisement fee from the sponsor 200 can be reflected in the cost of the medium, which can further decrease the offered price of the medium 4X.

Fig. 11 shows a flow chart of the anneal processing management by a user.

(S10) When the user inserts the MO medium into the MO drive in Fig. 7, the MO drive starts up. In other words, the spindle motor 18 rotates the MO medium 4, and the optical head 5 reads the system area of the medium 4.

(S12) The controller 15-1 acquires the anneal management information (Fig. 5 and Fig. 6) of the anneal management area 40 in the system area.

(S14) The controller 15-1 judges whether the entire surface of the medium 4 has been annealed based on the anneal management information.

(S16) If it is judged that the entire surface is not annealed, that is, if it is judged that a non-annealed area exists, the controller 15-1 outputs the content reproducing confirmation request (entire surface anneal processing confirmation request) to the user. If the user rejects content reproducing, the anneal processing is not performed, and the medium is ejected. In this case, the data section of the MO medium 4 can be recorded and reproduced at low recording density. For a specific value of low recording density, a recording density equivalent to the recording density when the shortest mark length of a pit of which length is approximately 4 times the shortest mark length ML = 0.17 $\mu$m of the MO mark is preferable.

(S18) When the user approves content reproducing, the optical head 5 reproduces the content of an unannealed section while performing the anneal processing at high power. When annealing of the entire area completes, the information is recorded to indicate "annealed" in the anneal management area 40.

(S20) If it is judged as entire surface annealed in step S14, or if anneal processing is performed in step S18, the data section 42 can be recorded/reproduced at high density, as mentioned above. Recording/reproducing is performed when necessary by user operation.

If the user stopped annealing in the middle of processing, the anneal management information is not updated, and a content reproducing confirmation request is resent. If the user inserts a medium 4, of which entire area has been annealed, into the device and must confirm the content information recorded in the pit section 4-1 again, content information can be reproduced at low power.

The improvement of the recording/reproducing characteristics of the data section by anneal processing mainly depends on anneal power, but also depends on the number of times anneal processing is performed. In other words, in the case of annealing at low power, characteristics improve more in some cases by annealing two or more times rather than only once. In practical terms however, annealing only once at approximately optimum power is preferable.

Fig. 12 shows a time-based relationship between the intensity of light irradiated onto the MO medium 4 (Light Power) and the magnetic field to be applied (Magnetic Field). As Fig. 12 shows, normally a magnetic field is not applied, but when an MO signals are recorded, a magnetic field, which inverts at an interval according to the recording marks, is applied. At this time, light modulated at a reference clock T interval is irradiated between two values, peak power Pwp, which is a write power, and bottom power Pwb.

When the MO signal is recorded, it is possible to record by inverting the magnetic field while irradiating a light having a predetermined power, but it is desirable to irradiate pulse light in order to increase the SNR (Signal to Noise Ratio) of record marks. Particularly for the power interval of the peak power Pwp, it is preferable to set duty, with respect to clock T, to 50% or less.

When the MO signals are reproduced, light power (read power) Pr, which is lower than the write power, is used. Also when pit signals are reproduced with simultaneously performing annealing of the guide groove, light intensity Pan, which is greater than the peak power Pwp of the write power, is used. In Fig. 12, Pr and Pan have constant light intensities to simplify description, but it is preferable to superimpose a high frequency, several hundred Mhz, for decreasing noise due to return light to the laser diode LD in the optical pickup 7.

The relationship between the light power intensities is preferably Pan ≥ Pwp > Pr ≥ Pwb, as shown in Fig. 12. In other words, the anneal power Pan ≥ write peak power Pwb, and as shown in Fig. 2, light is irradiated only the guide groove portion formed by the pits 414 which sandwich the MO marks 410 of the medium 4 as the anneal area, and as a result, a characteristic change is generated in the recording film of the MO disk 4 in the anneal area portion.

By this, the above mentioned displacement of the magnetic domain wall in a direction perpendicular to the track by the DWDD is suppressed, and the SNR of the MO marks 410 recorded between the anneal areas is improved. Also by setting the read power Pr ≥ write bottom power Pwb, the SNR during information recording by irradiating pulse light is effectively improved.

Fig. 13 and Fig. 14 are graphs describing the embodiment of the present invention. In the MO drive in Fig. 7, the spindle motor 18 is rotated under a constant condition of a 3 m/sec. linear velocity, and the result is evaluated. The MO marks 410 are recorded with RLL1-7 modulation signals, of which shortest mark length ML = 0.17 $\mu$m. The pit signals 414 are recorded with RLL1-7 modulation signals, of which shortest mark length ML = 0.68 $\mu$m.

The light irradiation power conditions are read power Pr = 2.2 mW and write bottom power Pwb = 1 mW, and the jitter characteristic of the MO signals is measured while changing the anneal power Pan and write peak power Pwp. Fig. 13 shows a result of measuring the MO jitter (%) with respect to the write peak power Pwp when the anneal power Pan is changed from 0 mW to 13 mW. Fig. 14 is a characteristic diagram of MO jitter (%) with respect to the anneal power Pan at write peak power Pwp with which MO jitter becomes the minimum.

As Fig. 13 shows, when the anneal power Pan is low (Pan = 5 mW in Fig. 13) or is high (Pan = 13 mW in Fig. 13), the MO jitter characteristic does not change compared with the case when anneal processing is not performed (Pan = 0 mW in Fig. 13), and MO jitter increases if anneal power increases (Pan = 13 mW in Fig. 13).

If the anneal power Pan is appropriately selected, anneal power Pan = 9 mW, for example, MO jitter drops to about 2/3 compared with the case of when annealing is not performed. Also in Fig. 13, MO jitter becomes the minimum when the write peak power Pwp is about 9 mW.

Fig. 14 shows the relationship between the pit reproducing power (anneal power) Pan and MO jitter at this write peak power Pwp (= 9 mW) at which the MO jitter becomes the minimum. As Fig. 14 shows, the MO jitter is the minimum at around anneal power Pan = 9 mW. As the anneal power Pan is further increased, the MO jitter tends to increase. This is probably because the change of the recording film by anneal processing reaches the recording area of the MO marks 410, and interrupts the magnetic domain wall displacement characteristic in the linear velocity direction.

According to this embodiment, anneal processing, which takes about 15 minutes per MO disk 4 at 3 m/sec. of linear velocity, is performed by the user side, so the medium manufacturer does not need the anneal device and need not perform anneal processing which takes 15 minutes per disk, and as a result, the manufacturing cost can be decreased dramatically.

As a method for the anneal processing, it is possible to reproduce the pit information, while performing anneal processing simultaneously, at a power in proportion to the radius position of the medium, with rotating the spindle motor at a constant angular velocity. By this, anneal processing can be performed without performing a complicated control to make the linear velocity constant.

Now a write and update of the anneal management information will be described. Fig. 15 is a flow chart depicting an anneal management information recording processing (write and update) by the magneto-optical recording.

(S22) Data scramble is performed on anneal management data (Fig. 5 and Fig. 6).

(S24) ECC (Error Correction Code) and parity are added to the scramble data, RLL1-7 modulation is performed, and magneto-optical recording is performed.

If the anneal management information is formed by pits, on the other hand, information indicating "unannealed" is recorded in the anneal area 40 of the medium 4 by pits. In order to update this anneal area 40 as anneal processing is performed, high power light X-1 is irradiated onto the pit section 4-1 in the anneal area 40 of the medium 4, as shown in Fig. 16, and the pit sections 4-1 are deformed. By the deformed pit sections 4-1a, pit signals 414 are inverted from "0" to "1".

Also as a method for confirming whether annealing processing has been performed on the optical information recording medium 4, it is possible to apply a magnetic field when the guide groove section 4-1 is reproduced at high power, and confirm whether anneal processing has been performed by the magnetization direction of this guide groove section 4-1. As mentioned above, it is effective to manage whether the anneal processing has been performed by creating the anneal information management area, but this information must be managed.

Therefore if alternating a magnetic field with a constant frequency is applied during anneal processing, for example, whether anneal processing has been performed can be confirmed by the magneto-optical signal of the guide groove section 4-1. However the magneto-optical signal from the guide groove 4-1 is modulated by the pit signals, so it is preferable to record a single mark longer than the pit signal, such as 5 $\mu$m long, and detect

a component according to the frequency.

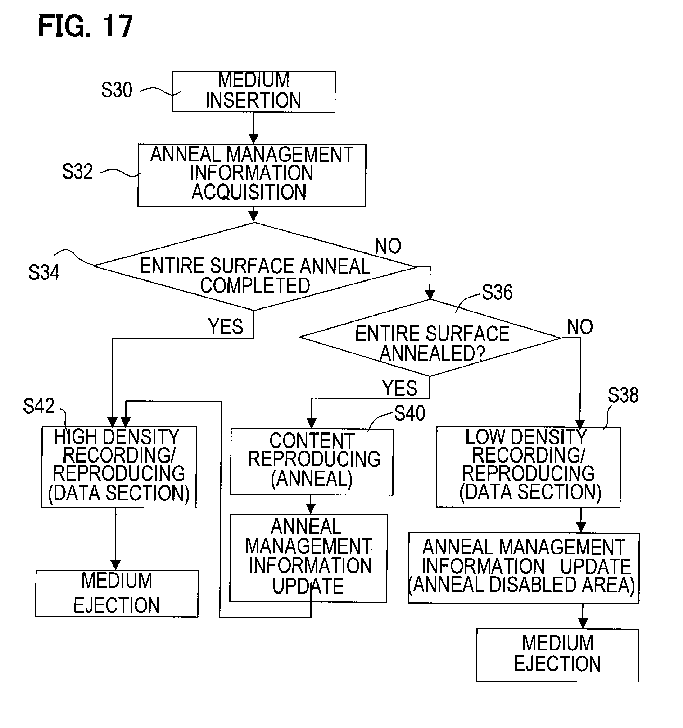

Fig. 17 shows another flow chart depicting the anneal process management by the user, and is an example of using the anneal management information in Fig. 6.

(S30) When the user inserts the MO medium into the MO drive in Fig. 7, the MO drive is started up. In other words, the spindle motor 18 rotates the MO medium 4 and the optical head 5 reads the system area of the medium 4.

(S32) The controller 15-1 acquires the anneal management information (Fig. 6) of the anneal management area 40 in this system area.

(S34) The controller 15-1 judges whether the entire surface of the medium 4 has been annealed based on the anneal management information.

(S36) If it is judged that the entire surface is not annealed, that is, if it is judged that an unannealed area exists, the controller 15-1 outputs the content reproducing confirmation request (entire surface anneal processing confirmation request) to the user.

(S38) If the user rejects content reproducing, anneal processing is not performed, and the data section of the MO medium 4 performs recording/reproducing at low recording density responding to the request of the user. Then the information of the anneal management area 40 is updated to anneal disabled area (e.g. "01" in Fig. 6), and the medium 4 is ejected. For a specific value of low recording density, a recording density equivalent to the recording density, when the shortest mark length of a pit of which length is approximately 4 times the shortest mark length ML = 0.17 μm of the MO mark is used, is preferable.

(S40) If the user approves content reproducing, on the other hand, the optical head 5 reproduces the content of the unannealed section while performing the anneal processing at high power. When annealing in the entire area completes, the information indicating "annealed" (e.g. "10" in Fig. 6) is recorded in the anneal management area 40.

(S42) If it is judged as entire surface annealed in step S34, or if anneal processing is performed in step S40, the data section 42 can be recorded/reproduced at high density, as mentioned above. Recording/reproducing is performed when necessary by operation of the user.

In this way, by granting the right to select anneal processing to the user, the user can select the change to high density recording/reproducing based on the user' judgment.

<u>Second embodiment of recording density change method</u>

In order to reproduce data nonstop during anneal processing, the size of the content information recorded in the pit section 4-1, which is a guide groove, is preferably a size recorded on the entire surface of the medium 4. The first embodiment corresponds to this mode.

On the other hand, in some cases, content equivalent to the entire surface area cannot be provided at a predetermined clock frequency. In such a case, the content information can be separated into sections, and the capacity of the pit information can be adjusted by inserting dummy data between sections.

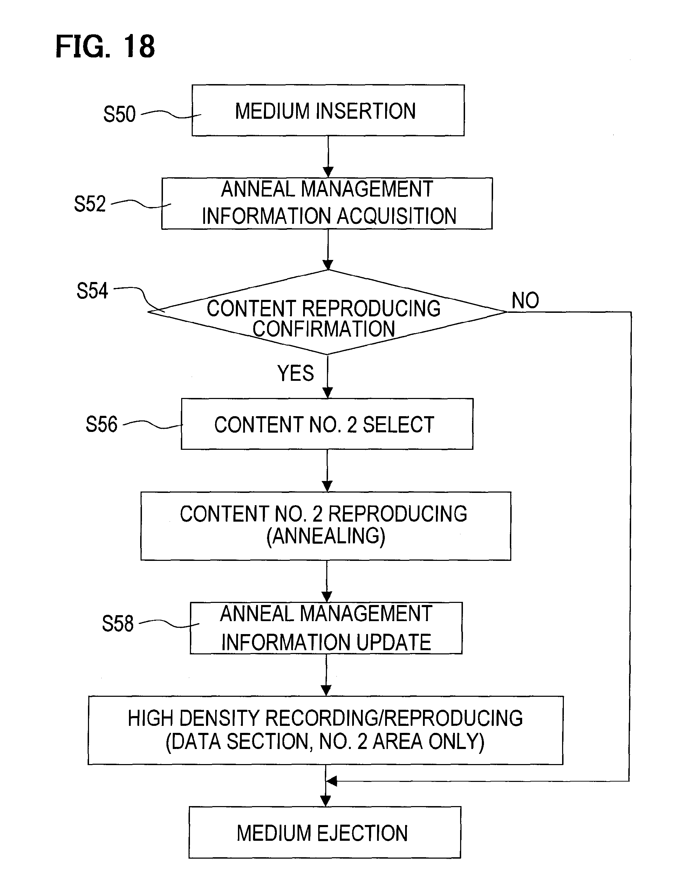

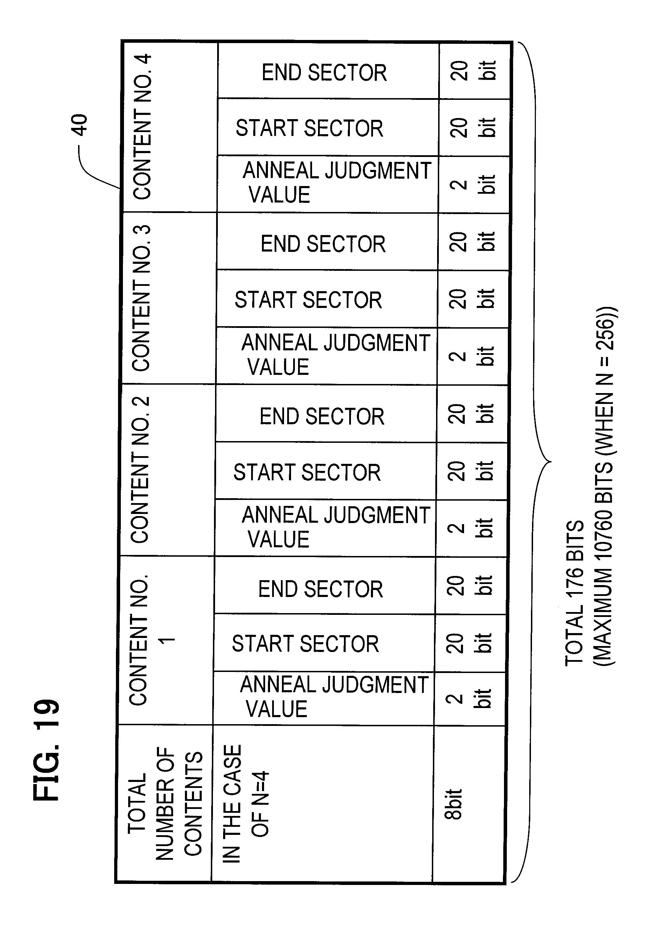

Fig. 18 is a flow chart depicting the processing of the recording density change method according to the second embodiment of the present invention, and Fig. 19 shows a content management table used for Fig. 18. Here an example when content is separated into four sections and none have been reproduced will be described.

(S50) When the user inserts the MO medium into the MO drive in Fig. 7, the MO drive starts up. In other words, the spindle motor 18 rotates the MO medium 4 and the optical head 5 reads the system area of the medium 4.

(S52) The anneal management area 40 of this system area stores the anneal judgment value (anneal management information) of each content No. 1 to No. 4 and a start sector address and end sector address of each content, as shown in Fig. 19. Here an example of recording four contents on one medium 4 is shown. The controller 15-1 acquires this anneal management information.

(S54) The controller 15-1 outputs the content reproducing confirmation request (that is, anneal processing confirmation request) to the user. If the user rejects content reproducing, the anneal processing is not performed, and the medium 4 is ejected. In this case, the data section of the MO medium 4 can be recorded and reproduced at low recording density. For a specific value of low recording density, a recording density equivalent to the recording density, when the shortest mark length of a pit of which length is approximately 4 times the shortest mark length ML = 0.17 μm of the MO mark is used, is preferable.

(S56) If the user approves content reproducing and selects a content to be reproduced (selects content No. 2 in this example), the controller 15-1 acquires a start address and end address of the corresponding content in the anneal management area 40, and the optical head 5 performs anneal processing in the area of this content of the medium 4 at high power, and simultaneously reproduces the content.

(S58) When annealing of this area of this content ends, the anneal judgment value of the content is updated to information indicating "annealed" in the anneal management area 40. By this, anneal processing of the content No. 2 area of the data section 42 can be recorded/reproduced at high density, as mentioned above. Recording/reproducing is performed when necessary by user operation, and the medium 4 is ejected.

This is the same for the case of selecting content No. 1, No. 3 or No. 4. In this way, the user can select a recording density according to the number of contents to be reproduced, and can divide and execute anneal processing. For example, the required capacity (content in this case) can be annealed and high density reproducing/recording is performed, then when more capacity is required, another content area can be annealed and used.

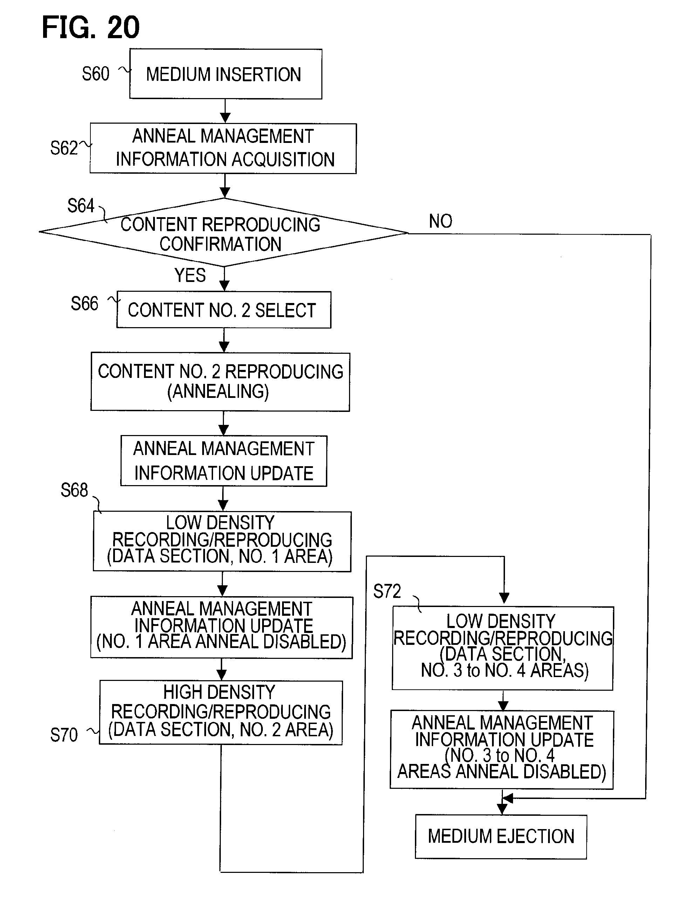

Fig. 20 is a flow chart depicting another processing of the recording density change method according to the second embodiment of the present invention, and is an example of using the content management table in Fig. 19, just like Fig. 18, and an example where content is separated into four sections and none have been reproduced will be described.

(S60) When the user inserts the MO medium into the MO drive in Fig. 7, the MO drive starts up. In other words, the spindle motor 18 rotates the MO medium 4 and the optical head 5 reads the system area of the medium 4.

(S62) The anneal management area 40 of this system area stores the anneal judgment value (anneal management information) of each content No. 1 to No. 4 and a start sector address and end sector address of each content, as shown in Fig. 19, just like the example in Fig. 18. Here an example of recording four contents on one medium 4 is shown. The controller 15-1 acquires this anneal management information.

(S64) The controller 15-1 outputs the content reproducing confirmation request (that is, anneal processing confirmation request) to the user. If the user rejects content reproducing, anneal processing is not performed, and the medium is ejected. In this case, the data section of the MO medium 4 can be recorded and reproduced at low recording density. For a specific value of low recording density, a recording density equivalent to the recording density, when the shortest mark length of a pit of which length is approximately 4 times the shortest mark length ML = 0.17 $\mu$m of the MO mark is used, is preferable.

(S66) If the user approves content reproducing, and selects a content to be reproduced (selects content No. 2 in this example), the controller 15-1 acquires a start address and end address of the corresponding content in the anneal management area 40, and the optical head 5 performs anneal processing on the area of this content of the medium 4 at high power, and simultaneously reproduces the content. When the annealing of the area of the content ends, the anneal judgment value of the content is updated to information indicating "annealed" in the anneal management area 40. By this anneal processing, the content No. 2 area of the data section 42 can be recorded/reproduced at high density, as mentioned above.

(S68) When recording/reproducing is performed by the operation of the user, the data area of the content No. 1, which is not annealed, is recorded/reproduced at low density, and an anneal judgment value of this content in the anneal management area 40 is updated to the information indicating "anneal disabled" ("01" in Fig. 6).

(S70) Then the data area of the content No. 2 is recorded/reproduced at high density according to the anneal judgment value in the anneal management area 40.

(S72) When the data areas of the content No. 3 and No. 4 are also recorded/reproduced by the operation of the user, which are not annealed, the data area are recorded/reproduced at low density, and the anneal judgment value of the contents of the anneal management area 40 is updated to information indicating "anneal disabled" ("01" in Fig. 6). Then the medium 4 is ejected.

In the case of selecting the content No. 1, No. 3 and No. 4 as well, the same operation is performed. In steps S64 and S66, a plurality of contents may be selected.

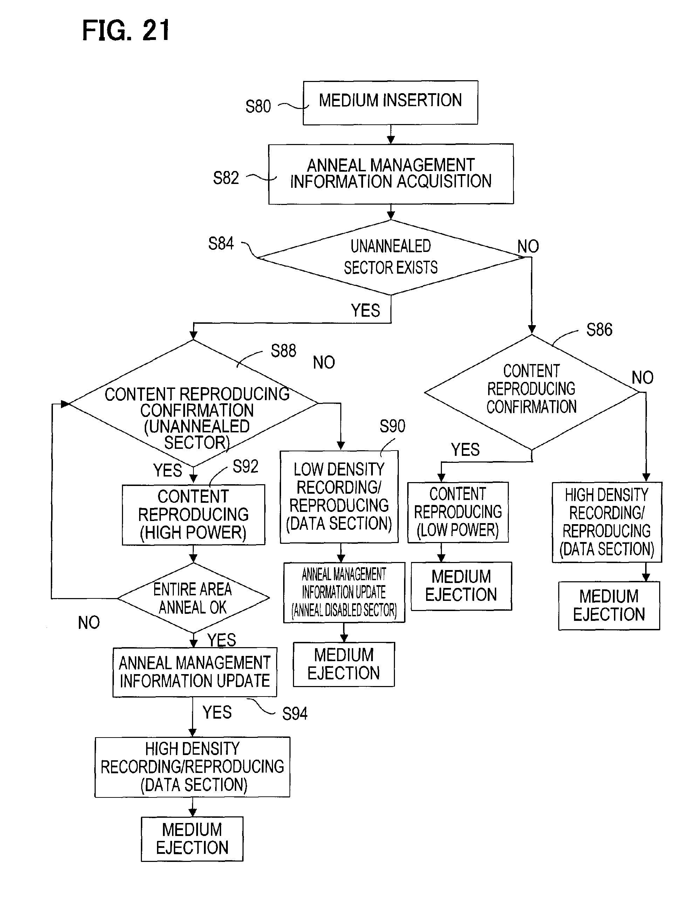

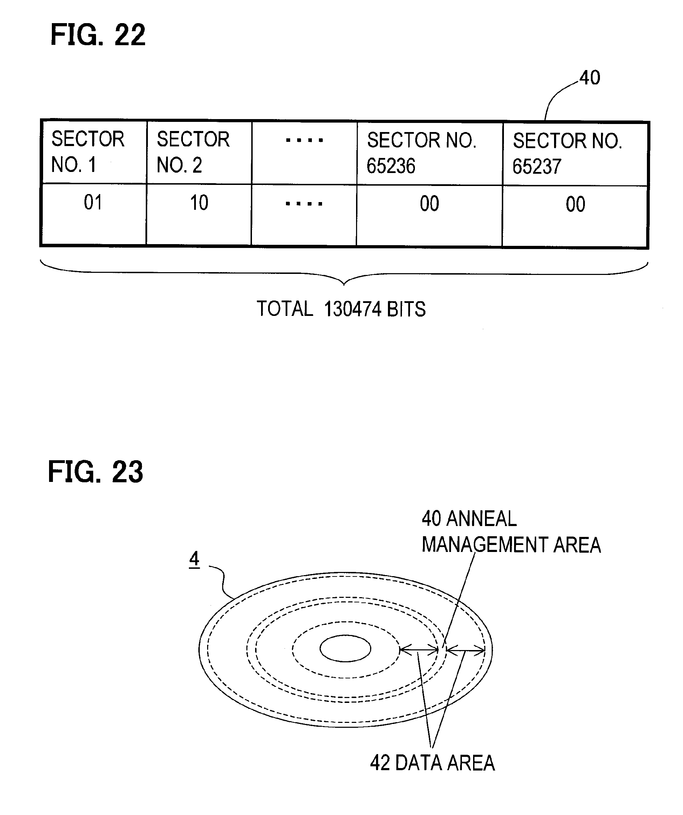

Also anneal processing can be performed in sector units or in block units. Fig. 21 is a flow chart depicting still another processing of the recording density change method according to the second embodiment of the present invention, and Fig. 22 is a table showing the configuration of the anneal management area in Fig. 21.

(S80) When the user inserts the MO medium into the MO drive in Fig. 7, the MO drive starts up. In other words, the spindle motor 18 rotates the MO medium 4, and the optical head 5 reads the system area of the medium 4.

(S82) The anneal management area 40 of this system area stores the anneal judgment value (anneal management information) of each sector No. 1 to No. 65237, as shown in Fig. 22. Here is an example when 65237 sectors exist in one medium 4. The controller 15-1 acquires this anneal management information.

(S84) The controller 15-1 checks the anneal management information and judges whether an unannealed sector exists.

(S86) If it is judged that no unannealed sector exists, the controller 15-1 outputs the content reproducing confirmation request to the user. If the user selects that content reproducing is unnecessary, all sectors which are annealed are recorded/reproduced to/from the data section. Then the medium 4 is ejected. If the user selects that content reproducing is necessary, on the other hand, the content of the pit section 4-1 of the medium 4 is read at low power (e.g. at read power Pr), and the content is reproduced, and the medium 4 is ejected.

(S88) If it is judged that unannealed sectors exist in step S84, the controller 15-1 outputs the content reproducing confirmation (that is, anneal processing confirmation request) to the user.

(S90) If the user rejects content reproducing, anneal processing is not performed, and the data section of the MO medium 4 can be recorded/reproduced at low recording density. And the anneal judgment values of the sectors of the anneal management area 40 is/are updated to information indicating "anneal disabled" ("01" in Fig. 6).

(S92) If the user approves content reproducing and selects a content to be reproduced, the controller 15-1 reproduces the content while performing anneal processing on the area of the content of the medium 4 by the optical head 5 at high power. Then it is judged whether annealing completed for an entire area, and if annealing is not completed for an entire area, processing returns to step S88.

(S94) If annealing is completed for an entire area, on the other hand, the anneal judgment value of the anneal management area 40 is updated to information indicating "annealed". By this anneal processing, the user area can be recorded/reproduced at high density, as mentioned above. Then the medium 4 is ejected.

In this way, anneal processing can be managed in sector units. By this, the user can select recording density according to the number of sectors required, and the user can divide and execute anneal processing. This advantage is also the same for managing in block units.

Other anneal processing

Fig. 23 is a diagram depicting the anneal management area according to another embodiment of the present invention. In this example, the user area 42 of the medium 4 is divided into two, and a system area including an anneal management area 40 is formed between these two user areas 42. In other words, the anneal management area 40 can be formed in a predetermined position, such as between user areas or outermost circumference, and is not limited to the innermost circumference.

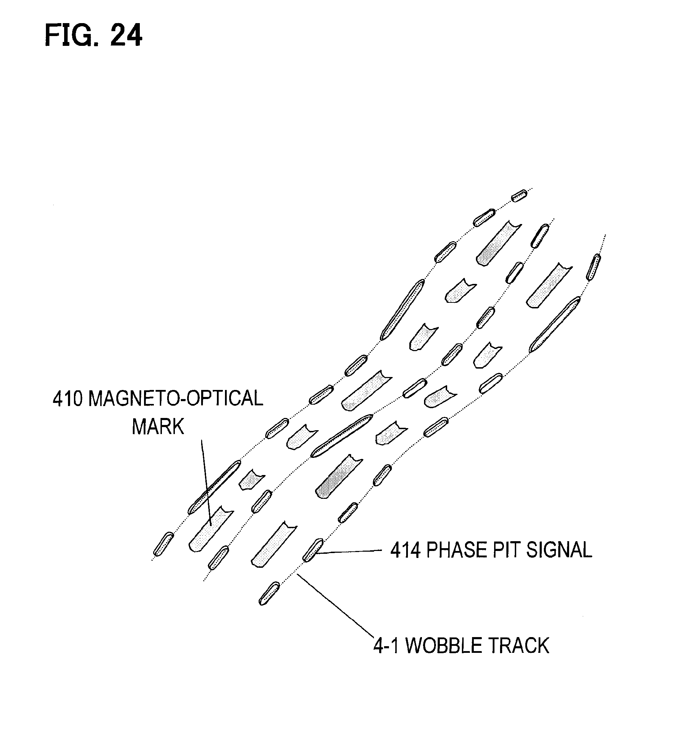

Fig. 24 is a diagram depicting a configuration of wobble pits to be applied to the present invention. Wobble pits are disclosed in Japanese Patent Application laid-Open No. H11-328678, for example. In the case of a method for performing address management by creating a pre-pit section on the MO track of the MO disk 4, the optical power of a pre-pit section must be decreased when the MO signals of the lands are recorded. When the pit section 414 is formed by a wobble track 4-1, that is, when a track configuration which wobbles according to the rotation, is used, an address can be detected from the wobble signal acquired by the wobbling frequency. Therefore the pre-pit section is not required, and complicated control is unnecessary.

Manufacturing method for optical storage medium

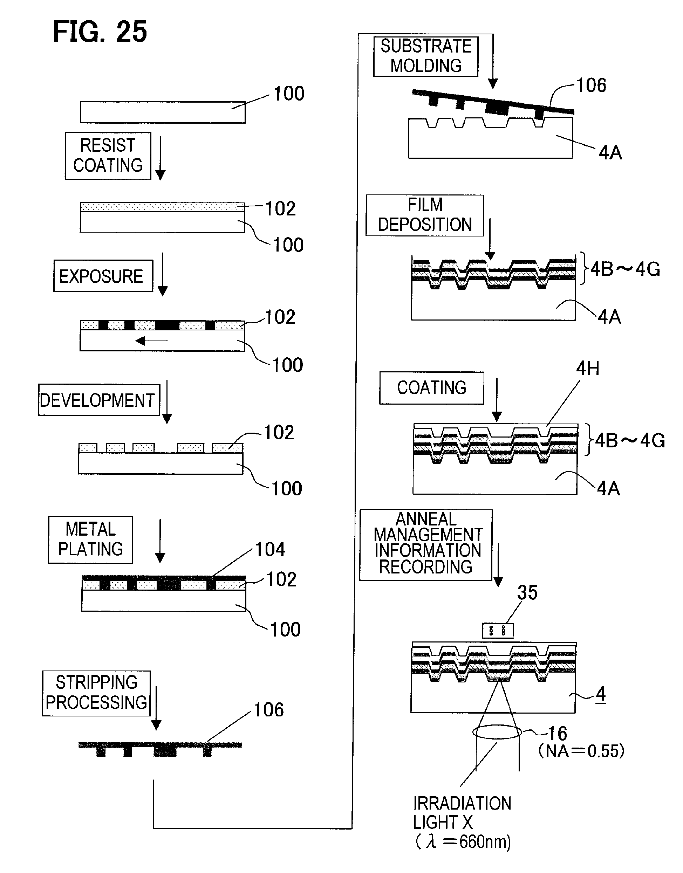

Now a manufacturing method for an optical storage medium 4 will be described. Fig. 25 is a diagram depicting a manufacturing method for the optical storage medium having the anneal management information according to the first embodiment of the present invention, and shows an example of magneto-optical recording the anneal management information.

As Fig. 25 shows, after optical polishing, a resist layer 102 is formed on a cleaned glass substrate 100 by a spin coat method. The resist layer 102 is uniformly formed with an 80 nm thickness, which is close to the depth of the pits. In order to improve wettability between the resist 102 and the glass substrate 100, it is preferable to coat an azo-coupling agent on the glass substrate 100 before coating the resist.

After coating the resist, the glass substrate is heated at 90° for one hour, for example, to volatilize the organic solvent contained in the resist. While the glass substrate 100 on which the resist layer 102 is formed is rotated at precision by the spindle motor, exposure is performed for generating pit forms. For example, light from an He-Cd laser ($\lambda$ = 446.1 nm) is condensed on the resist by an object lens with a high NA (e.g. NA = 0.9), by which exposure is performed for generating pit forms.

The exposed glass substrate 100 is developed by a sodium hydroxide solution at a predetermined concentration for a predetermined time, and a resist layer 102 with pit forms is formed on the glass substrate 100. After forming a thin conductive film on this glass substrate 100 by electroless plating, about a 300 $\mu$m thick nickel plating is performed by electroless plating to form a metal layer 104.

After stripping this metal layer 104 from the glass substrate 100, cleaning is performed to remove the remaining resist, then rear face polishing and stamping processing are performed to create a metal stamper 106.

Using this metal stamper 106 and a die matching a predetermined disk size, a plastic substrate 4A, made from polycarbonate, is molded. The molded substrate 4A is heated in an over at about 80°C for one hour to remove moisture. The substrate 4A, after sufficiently removing moisture, is inserted into a vacuum chamber, and a dielectric layer 4B, reproducing layer 4C, switching layer 4D, recording layer 4E, dielectric layer 4F and metal protective layer 4G, shown in Fig. 1, are formed by a sputtering method.

A protective layer 4H is coated on the medium 4, which is removed from the vacuum chamber, by a spin coat method. An ultraviolet hardening type resin is used for the protective layer 4H. The protective layer 4H has about a 10 $\mu$m thickness, and is uniformly formed. Then the protective layer 4H is hardened by irradiating ultraviolet, and the medium 4 is created.

According to an embodiment of the present invention, anneal management information is recorded in an anneal management area 40 in the recording layer 4E of the medium 4 by irradiation light via the magnetic head 35 and the objective lens 16. The anneal management information to be written is information indicating "unannealed" in Fig. 5, or information indicating "unannealed and unrecorded" in Fig. 6. As Fig. 4 shows, the recording method of this anneal management area 40 has 2 types: low density recording in unannealed status, and high density recording in annealed status.

In this way, the medium manufacturer records the anneal management information and provides the medium 4, of which user area 42 is in unannealed status, to the market. The above mentioned pit forms are generated according to the above mentioned information of the content. For the information of the content, voice, image and software, for example, are appropriate.

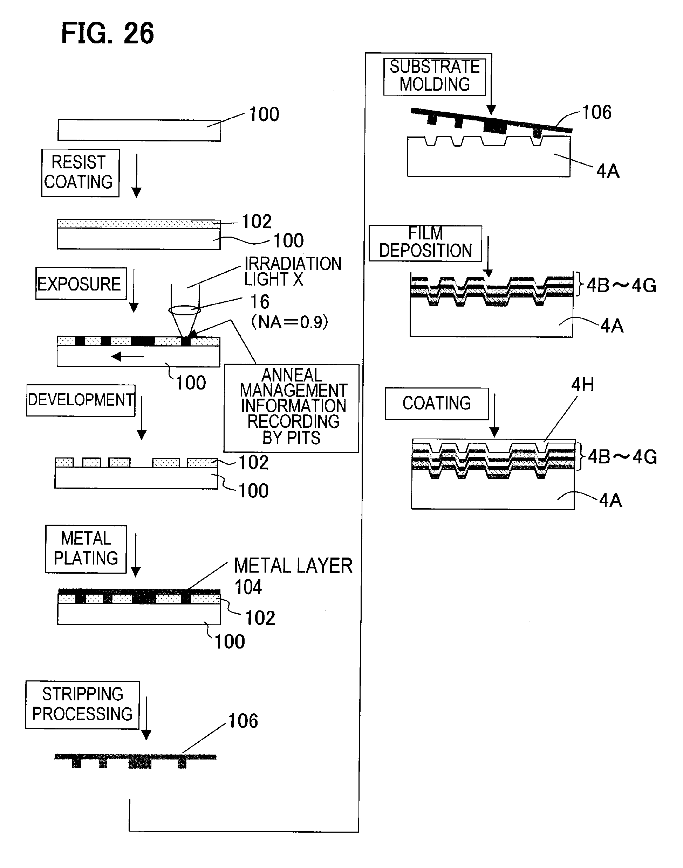

Fig. 26 is a diagram depicting a manufacturing method for the optical storage medium having the anneal management information according to the second embodiment of the present invention, and shows an example when the anneal management information is recorded by a pit string.

As Fig. 26 shows, after optical polishing, a resist layer 102 is formed on a cleaned glass substrate 100 by a spin coat method. The resist layer 102 is uniformly formed with a 80 nm thickness, which is close to the depth of the pits.

After coating the resist, the glass substrate is heated at 90°C for one hour, for example, to volatilize the organic solvent contained in the resist. While the glass substrate 100, on which the resist layer 102 is formed, is rotated with precision by the spindle motor, exposure is performed for generating pit forms. For example, light X from a He-Cd laser ($\lambda$ = 446.1 nm) is condensed on the resist by an objective lens 16 with high NA (e.g. NA = 0.9), by which exposure is performed for generating pit forms.

According to another embodiment of the present invention, anneal management information is exposed on an area corresponding to the anneal management area 40 of the resist layer 102 by irradiation light via an objective lens 16. The anneal management information to be exposed is information indicating "unannealed" in Fig. 5, or information indicating "unannealed and unrecorded" in Fig. 6.

The glass substrate 100, of which anneal management area has been exposed, is developed by a sodium hydroxide solution at a predetermined concentration for a predetermined time, and a resist layer 102 with pit forms is formed on the glass substrate 100. After forming a thin conductive film on this glass substrate 100 by electroless plating, about a 300 $\mu$m thick nickel plating is performed by electroless plating to form a metal layer 104.

After stripping this metal layer 104 from the glass substrate 100, cleaning is performed to remove the remaining resist, then rear face polishing processing and stamping processing are performed to create a metal stamper 106.

Using this metal stamper 106 and a die matching a predetermined disk size, a plastic substrate 4A, made from polycarbonate, is molded. The molded substrate 4A is heated in an oven at about 80°C for one hour to remove moisture. The substrate 4A, after sufficiently removing moisture, is inserted into a vacuum chamber, and a dielectric layer 4B, reproducing layer 4C, switching layer 4D, recording layer 4E, dielectric layer 4F and metal protective layer 4G, shown in Fig. 1, are formed by a sputtering method.

A protective layer 4H is coated on the medium 4, removed from the vacuum chamber, by a spin coat method. An ultraviolet hardening type resin is used for the protective layer 4H. The protective layer 4H has about a 10 $\mu$m thickness, and is uniformly formed. Then the protective layer 4H is hardened by irradiating ultraviolet, and the medium 4 is created.

In this way, the medium 4, where anneal management information is recorded in pits, is created. In this example as well, the medium 4, of which the user area 42 is unannealed, is provided by the medium manufacturer to the market.

Recording density change method for another optical storage medium

In the above description, the magneto-optical recording medium is used as the optical storage medium, but the present invention can be applied to other optical storage media. Now an example of using a phase change type medium as another optical storage medium will be described.

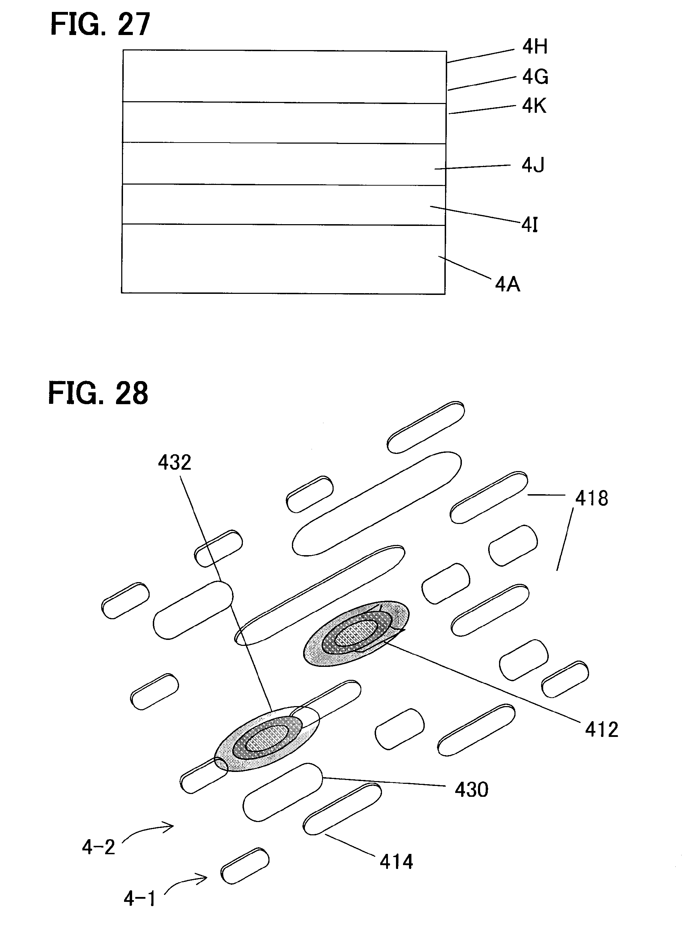

Fig. 27 is a cross-sectional view depicting an optical storage medium according to another embodiment of the present invention, and shows the film configuration of a phase change type medium. On an optically transparent substrate (polycarbonate substrate) 4A, a dielectric layer 4I formed with Zn · SiO$_2$, for example, a recording/reproducing layer 4J formed with GeSbTe, a dielectric layer 4K formed with ZnS · SiO$_2$, for example, and a metal protective layer 4G formed with A1, are sequentially formed normally by a sputtering method. An ultraviolet hardening type resin 4H is normally formed on the metal protective layer 4G by a spin coat method, and is stabilized by the irradiation of ultraviolet.

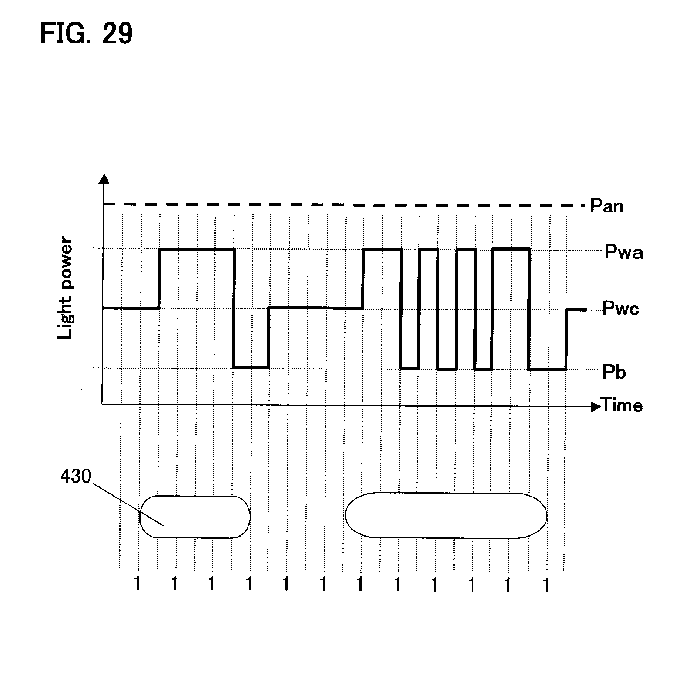

Fig. 28 is a diagram depicting the relationship between the pits and phase change marks in the phase change type medium in Fig. 27, and Fig. 29 is a diagram depicting the light intensity when the phase change marks in Fig. 28 are recorded. As Fig. 28 shows, while the pit signals 414 are recorded in the substrate 4 in advance by physical bumps, the phase change marks 430 are recorded by the phase status (crystal or amorphous) of the recording/reproducing layer 4J formed with GeSbTe. Specifically, the recording/reproducing layer 4J can change the phase between the crystal status of which reflectance is high and amorphous status of which reflectance is low, and the phase change marks 430 are formed by the change of the optical refractive index.

The anneal area 418 is an area of a pit string 4-1, just like the example in Fig. 2. As Fig. 29 shows, with respect to a bias light power Pb which is approximately close to a reproducing light power (read power), a high light power Pwa for generating the amorphous status and a light power Pwc for generating the crystal status are set.

If the recording/reproducing layer 4J formed with GeSbTe is irradiated at high power Pwa, the recording medium 4 is heated to a higher temperature, then is suddenly cooled down to generate the amorphous status.

If light with power Pwc, which is lower than the light power Pwa, is irradiated, the medium 4 is slowly cooled down after the recording/reproducing layer 4J is heated, so the crystal status is generated. Using this difference, the phase change marks 430 are generated (written).

As Fig. 29 shows, if the light power Pan, of which intensity is higher than the high power Pwa, is irradiated, the GeSbTe layer 4j is damaged and the physical characteristics change. In other words, by irradiating the light 432 onto the pits 414 shown in Fig. 28 at light power Pan, the GeSbTe layer 4J at the track string side formed by the pit string 4-1 is altered, and the spread of the mark 430 in a direction perpendicular to the track can be suppressed. In other words, by anneal processing, the recording/reproducing characteristic of the phase change marks 430, recorded between the pit strings 4-1, can be improved.

To read the phase change marks 430, the read light with light intensity Pb is irradiated, and recorded data by the phase change marks is reproduced by the above difference of reflectance.

In the same way, a medium comprised of lands/grooves, without forming pits, shown in Fig. 31, can be used. For example, the land section 402 in Fig. 31 is annealed, and the MO signals are recorded in the groove section 404. The groove section 404 may be annealed, and the MO signals may be recorded in the land section 402 instead.

Now the recording density change method according to the third embodiment of the present invention will be described. In the above mentioned embodiments, an advertisement is formed with pits based on the business model in Fig. 10, but the present invention is not limited to these embodiments, but can also be applied to a medium where pits are not formed, as shown in Fig. 31.

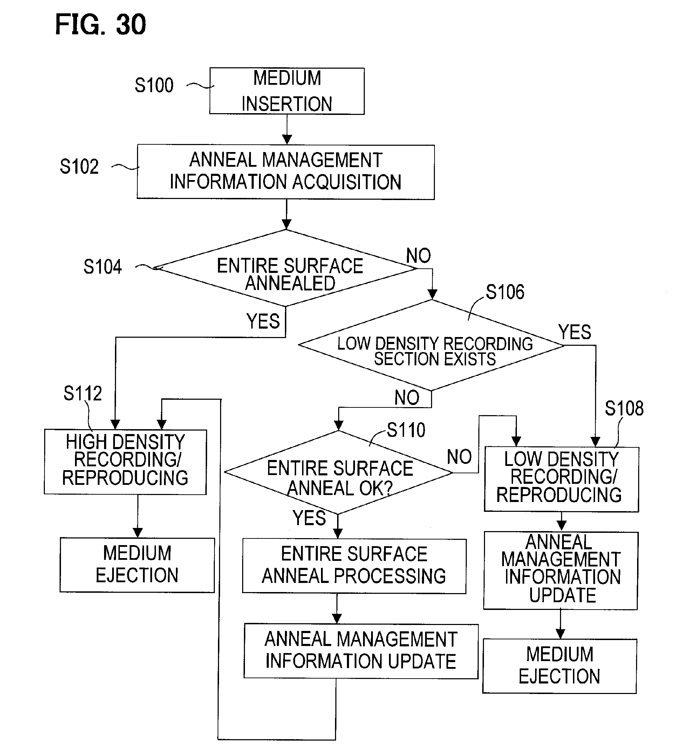

Fig. 30 is a flow chart depicting a recording density change processing according to the third embodiment of the present invention, and is an example when the anneal management information in Fig. 6 is used.

(S100) When the user inserts the MO medium into the MO drive in Fig. 7, the MO drive is started up. In other words, the spindle motor 18 rotates the MO medium 4, and the optical head 5 reads the system area of the medium 4.

(S102) The controller 15-1 acquires the anneal management information (Fig. 6) of the anneal management area 40 in this system area.

(S104) The controller 15-1 judges whether the entire surface of the medium 4 has been annealed based on the anneal management information.

(S106) If it is judged that the entire surface is not annealed, that is, if it is judged that an unannealed area exists, the controller 15-1 judges whether the user area 42 is recorded at low density based on the anneal management information in Fig. 6.

(S108) If recorded at low density, data is recorded/reproduced in the user area of the MO medium 4 at low density according to the request of the user, then the information of the anneal management area 40 is updated, and the medium 4 is ejected.

(S110) If the user area 42 is not recorded at low density at all, the user is prompted whether to anneal the entire surface. If the user selects not to anneal the entire surface, processing advances to step S108, and recording is performed at low density. If the user selects to anneal the entire surface, the controller 15-1 performs anneal processing at high power using the optical head 5. In this case, content is not formed with pits, and content is not reproduced. When annealing of the entire area completes, information indicating "annealed" (e.g. "10" in Fig. 6) is recorded in the anneal management area 40.

(S112) If it is judged as entire surface annealed in step S104, or if anneal processing is performed in step S110, the data section 42 can be recorded/reproduced at high density, as mentioned above. Recording/reproducing is performed when necessary by operation of the user.

In this way, by granting the right to select anneal processing to the user, the user can select the change to high density recording/reproducing based on the user judgment. In other words, either high density recording or low density recording is selected depending on whether an entire medium is annealed. If the medium has already been recorded at low density, anneal processing cannot be performed in order to protect user data, so subsequent recording/reproducing will always be at low density.

If low density recording has not been performed, it can be selected weather anneal processing is performed, and if anneal processing is performed, data can be recorded/reproduced as a high density recording medium. If anneal processing is not selected, the medium can be used as a low density recording medium. Even if this medium is used as a low density recording medium, high density recording/reproducing can be enabled if the entire disk is reformatted and annealed.

In the above embodiment, anneal processing is performed in entire surface units, but anneal processing can also be performed in block units or sector units. In terms of practicality, however, it is preferable to divide one disk into several tens of blocks, and process in block units, since the volume of management information becomes enormous if annealing is performed in sector units.

If anneal information is managed in block units, high density recording/reproducing and low density recording/reproducing can be used for the annealed area and unannealed area respectively. In this case, if an available area of one area becomes full, processing is shifted to another area, where the recording density must be switched.

Other embodiments

The present invention is described above using the embodiments, but the present invention can be modified in various ways within the scope of the essential character of the present invention, and these variant forms shall not be excluded from the technical scope of the present invention. For example, the size of a phase pit is not limited to the above mentioned numeric values, but other values can be used. For the magneto-optical recording film, another magneto-optical recording material can be used. Also the magneto-optical recording medium is not limited to a disk shape, but may be a card shape or another shape.

It is also possible that when the content information is reproduced by irradiating high power light, the defective number of sectors used for recording/reproducing data in the recording film is estimated based on the error rate of the reproducing information or on a detected optical component amplitude value including the reproducing information, and the defective sectors are managed based on this estimated number of defective sectors.

The content information is formed by phase pits based on physical bumps, and the phase pits are not on a straight line for detecting address information and clocks. The guide grooves of the medium form concentric or spiral tracks, and information is recorded/reproduced by rotating. The content information may be reproduced by irradiating high power light under conditions of a constant linear velocity in the track direction.

A guide groove is constructed such that concentric or spiral tracks are formed, and information is recorded/reproduced by rotating. The disk is rotated at a predetermined rotation frequency at a predetermined radius position, and the content information is reproduced by irradiating high power light with a light power which is in inverse proportion to the radius position.

This content information is comprised of execution type files so as to be automatically activated, and output as voice information and image information when the content information is reproduced while irradiating high power light to a guide groove.

INDUSTRIAL APPLICABILITY

Since the anneal management information is recorded without performing anneal processing on the optical storage medium and provided to the user, anneal processing can be performed based on the selection of the user, and high density recording/reproducing is enabled by an anneal effect in the area between recording tracks. In this case, initialization processing (anneal processing) can be omitted in the recording medium manufacturer, and the medium can be provided at low price. Also the anneal effect makes it unnecessary to use deep groove substrates, so a substrate to be used for the medium can be manufactured easily. It is preferable to record advertisement information as the content information in a pit section, then content can be automatically reproduced during anneal processing, and the medium price can be reduced by advertisement fees.

**Claims**

1. An optical storage medium for recording and reproducing at least by light, comprising:

   a substrate that has grooves and lands constructed by a change of physical form; and
   a recording layer formed on the substrate,

   wherein the groove or land has rewritable anneal management information indicating whether anneal processing for separating the recording layer by the groove or land by irradiating the light and increasing recording density has been performed.

2. The optical storage medium according to Claim 1, wherein the anneal management information is formed in a pit shape in the groove or land.

3. The optical storage medium according to Claim 1, wherein the anneal management information is formed in the recording layer of the groove or land.

4. The optical storage medium according to Claim 1, further comprising:

   a system area, where the anneal management information is formed; and
   a user area.

5. The optical storage medium according to Claim 1, wherein the recording layer is constructed by a magneto-optical layer.

6. The optical storage medium according to Claim 1, wherein pit-shaped content is formed in an anneal area of the land or groove.

7. A manufacturing method for an optical storage medium for recording and reproducing at least by light, comprising the steps of:

   forming a substrate that has grooves and lands constructed by a change of physical form;
   forming a recording layer on the substrate; and
   rewritably forming, in the groove or land, anneal management information indicating whether anneal processing for separating the recording layer by the groove or land by irradiating the light and increasing recording density has been performed.

8. The manufacturing method for an optical storage medium according to Claim 7, wherein the step of forming the anneal management information comprises a step of forming the anneal management information in a pit shape in the groove or land.

9. The manufacturing method for an optical storage medium according to Claim 7, wherein the step of forming the anneal management information further comprises a step of forming the anneal management information in the recording layer of the groove or land.

10. The manufacturing method for an optical storage medium according to Claim 7, wherein the step of forming the substrate further comprises a step of forming pit-shaped content in an anneal area of the land or groove.

11. An optical storage device for recording and reproducing an optical storage medium at least by light, comprising:

an optical head for reading an optical storage medium which has grooves and lands constructed by a change of physical form, and a recording layer; and
a controller for executing anneal processing for separating the recording layer by the groove or land by irradiating light and increasing recording density, according to anneal management information indicating weather anneal processing has been performed, read from the optical storage medium.

12. The optical storage device according to Claim 11, wherein the optical head reads the anneal management information formed in a pit shape in the groove or land.

13. The optical storage device according to Claim 11, wherein the optical head reads the anneal management information formed in the recording layer of the groove or land.

14. The optical storage device according to Claim 11, wherein the optical head reads the optical storage medium having a system area, where the anneal management information is formed, and a user area, and wherein the controller performs anneal processing on the user area according to the anneal management information.

15. The optical storage device according to Claim 11, wherein the recording layer of the optical storage medium is constructed by a magneto-optical layer.

16. The optical storage device according to Claim 11, wherein the optical head reads pit-shaped content formed in an anneal area of the land or groove when the anneal processing is performed.

17. The optical storage device according to Claim 11, wherein the controller updates the anneal management information of the optical storage medium after the anneal processing.

18. The optical storage device according to Claim 11, wherein the controller determines recording density in a user area of the optical storage medium by referring to the anneal management information of the optical storage medium.

19. The optical storage device according to Claim 18, wherein the controller records/reproduces data in the user area of the optical storage medium at a relatively high density when the anneal management information of the optical storage medium indicates that annealing has been performed, and records/reproduces data in the user area of the optical storage medium at a relatively low density when the anneal management information of the optical storage medium indicates that annealing has not been performed.

20. The optical storage device according to Claim 11, wherein the controller executes anneal processing of the user area of the optical storage medium when the anneal management information of the optical storage medium indicates that annealing has not been performed.

# FIG.1

OPTICAL
RECORDING MEDIUM
ADVANCING
DIRECTION Y

HIGH
TEMPERATURE
AREA HTA

IRRADIATION LIGHT X

4

4H
4G
4F
4E
4D
4C
4B
4A

# FIG. 2

# FIG. 3

40 ANNEAL
MANAGEMENT AREA

4

42
DATA
AREA

40-1 ANNEAL
COMPLETION
INFORMATION
(MAGNETO-OPTICAL
SIGNAL)

40-2

FIG. 4

| RECORDING SYSTEM | MANAGEMENT AREA RECORDING METHOD |
|---|---|
| MAGNETO-OPTICAL RECORDING | NO ANNEAL PROCESSING IN MANAGEMENT AREA |
| | ANNEALING PROCESSING PERFORMED IN MANAGEMENT AREA IN ADVANCE |
| PIT RECORDING | RECORDING ROM SIGNAL ON SUBSTRATE PIT IS DESTROYED BY HIGH POWER LASER PROCESSING |

FIG. 5

40

| STATUS | VALUE |
|---|---|
| ANNEALED | 0 |
| UNANNEALED | 1 |

FIG. 6

40

| STATUS | VALUE |
|---|---|
| UNANNEALED & DATA SECTION UNRECORDED | 00 |
| UNANNEALED & DATA SECTION RECORDED AT LOW DENSITY | 01 |
| ANNEALED & DATA SECTION UNRECORDED | 10 |
| ANNEALED & DATA SECTION RECORDED AT HIGH DENSITY | 11 |

# FIG. 7

FIG. 8

# FIG. 9

25-1

A | B

SERVO DETECTION
SPOT S

D | C

# FIG. 10

SPONSOR 200

204

MEDIUM
MANUFACTURER

ADVERTISEMENT
INFORMATION A

ADVERTISING
AGENCY 202

MEDIUM WITH
ADVERTISEMENT 4X

USER 206

RECORDABLE
MEDIUM 4Y

## FIG. 11

```
                    ┌─────────────────┐
        S10 ─────┤     MEDIUM      │
                    │    INSERTION    │
                    └────────┬────────┘
                             │
                    ┌────────▼─────────┐
   S12 ──────┤ ANNEAL MANAGEMENT │
                    │   INFORMATION    │
                    │   ACQUISITION    │
                    └────────┬─────────┘
                             │
                        ◇────▼────◇              NO
   S14 ───────◇ ENTIRE SURFACE  ◇────────────┐
                   ◇  ANNEALED  ◇                │
                        ◇────┬────◇                │
                        YES  │                      │    ─S16
                             │                      ▼
                             │              ◇──────────◇      NO
                             │             ◇ ENTIRE SURFACE ◇────────┐
                             │             ◇  ANNEALED ?   ◇          │
                             │              ◇──────┬───────◇          │
                             │                    YES                  │
   S20 ─┐                    │                     │                    │
        ▼                    ▼                     ▼                    ▼
 ┌──────────────┐    ┌──────────────┐     ┌──────────────┐
 │ HIGH DENSITY │    │   CONTENT    │─S18 │   MEDIUM     │
 │  RECORDING/  │    │ REPRODUCING  │     │   EJECTION   │
 │ REPRODUCING  │    │   (ANNEAL)   │     └──────────────┘
 │(DATA SECTION)│    └──────┬───────┘
 └──────┬───────┘           │
        │             ┌─────▼──────────┐
        ▼             │ ANNEAL MANAGEMENT │
 ┌──────────────┐    │ INFORMATION UPDATE │
 │   MEDIUM     │    └──────────────────┘
 │   EJECTION   │
 └──────────────┘
```

# FIG. 12

FIG. 13

FIG. 14

# FIG. 15

```
        ┌─────────────────────────┐
S22 ────┤        ANNEAL           │
        │   MANAGEMENT DATA       │
        └─────────────────────────┘
                     │
                     ▼
        ┌─────────────────────────┐
        │         DATA            │
        │       SCRAMBLE          │
        └─────────────────────────┘
                     │
                     ▼
        ┌─────────────────────────┐
S24 ────┤       ECC AND           │
        │   PARITY ADDITION       │
        └─────────────────────────┘
                     │
                     ▼
        ┌─────────────────────────┐
        │        RLL 1-7          │
        │      MODULATION         │
        └─────────────────────────┘
                     │
                     ▼
        ┌─────────────────────────┐
        │   MAGNETO-OPTICAL       │
        │      RECORDING          │
        └─────────────────────────┘
```

# FIG. 16

4-1 PIT SECTIONS

X-1

4

4-1a
TRANSFORMED
PIT SECTIONS

4

## FIG. 17

```
S30 ──┐   ┌─────────────────┐
       └──│     MEDIUM        │
          │    INSERTION      │
          └─────────────────┘
                   │
                   ▼
          ┌─────────────────────┐
S32 ──────│ ANNEAL MANAGEMENT   │
          │    INFORMATION       │
          │    ACQUISITION       │
          └─────────────────────┘
                   │
                   ▼
                                         NO
S34 ─┐    ◇ ENTIRE SURFACE ANNEAL ◇──────────┐
     └──── ◇      COMPLETED       ◇           │
                   │                          ▼
                  YES                    ◇ S36
                                ◇ ENTIRE SURFACE ◇   NO
                                ◇   ANNEALED?    ◇────────┐ S38
                                        │                 │
                                       YES                │
                                   ─S40                   │
```

| S42 HIGH DENSITY RECORDING/ REPRODUCING (DATA SECTION) | CONTENT REPRODUCING (ANNEAL) ─S40 | LOW DENSITY RECORDING/ REPRODUCING (DATA SECTION) S38 |
|---|---|---|
| MEDIUM EJECTION | ANNEAL MANAGEMENT INFORMATION UPDATE | ANNEAL MANAGEMENT INFORMATION UPDATE (ANNEAL DISABLED AREA) |
| | | MEDIUM EJECTION |

# FIG. 18

S50 — MEDIUM INSERTION

↓

S52 — ANNEAL MANAGEMENT INFORMATION ACQUISITION

↓

S54 — CONTENT REPRODUCING CONFIRMATION — NO

YES ↓

S56 — CONTENT NO. 2 SELECT

↓

CONTENT NO. 2 REPRODUCING (ANNEALING)

↓

S58 — ANNEAL MANAGEMENT INFORMATION UPDATE

↓

HIGH DENSITY RECORDING/REPRODUCING (DATA SECTION, NO. 2 AREA ONLY)

↓

MEDIUM EJECTION

# FIG. 19

40

| TOTAL NUMBER OF CONTENTS | IN THE CASE OF N=4 | | 8bit |
|---|---|---|---|
| | CONTENT NO. 1 | ANNEAL JUDGMENT VALUE | 2 bit |
| | | START SECTOR | 20 bit |
| | | END SECTOR | 20 bit |
| | CONTENT NO. 2 | ANNEAL JUDGMENT VALUE | 2 bit |
| | | START SECTOR | 20 bit |
| | | END SECTOR | 20 bit |
| | CONTENT NO. 3 | ANNEAL JUDGMENT VALUE | 2 bit |
| | | START SECTOR | 20 bit |
| | | END SECTOR | 20 bit |
| | CONTENT NO. 4 | ANNEAL JUDGMENT VALUE | 2 bit |
| | | START SECTOR | 20 bit |
| | | END SECTOR | 20 bit |

TOTAL 176 BITS
(MAXIMUM 10760 BITS (WHEN N = 256))

# FIG. 20

S60 — MEDIUM INSERTION

↓

S62 — ANNEAL MANAGEMENT INFORMATION ACQUISITION

↓

S64 — CONTENT REPRODUCING CONFIRMATION — NO →

YES ↓

S66 — CONTENT NO. 2 SELECT

↓

CONTENT NO. 2 REPRODUCING (ANNEALING)

↓

ANNEAL MANAGEMENT INFORMATION UPDATE

↓

S68 — LOW DENSITY RECORDING/REPRODUCING (DATA SECTION, NO. 1 AREA)

↓

ANNEAL MANAGEMENT INFORMATION UPDATE (NO. 1 AREA ANNEAL DISABLED)

↓

S70 — HIGH DENSITY RECORDING/REPRODUCING (DATA SECTION, NO. 2 AREA)

S72 — LOW DENSITY RECORDING/REPRODUCING (DATA SECTION, NO. 3 to NO. 4 AREAS)

↓

ANNEAL MANAGEMENT INFORMATION UPDATE (NO. 3 to NO. 4 AREAS ANNEAL DISABLED)

↓

MEDIUM EJECTION

# FIG. 21

S80 — MEDIUM INSERTION

S82 — ANNEAL MANAGEMENT INFORMATION ACQUISITION

S84 — UNANNEALED SECTOR EXISTS — NO

YES

S88 — CONTENT REPRODUCING CONFIRMATION (UNANNEALED SECTOR) — NO

S86 — CONTENT REPRODUCING CONFIRMATION — NO

YES — S92 — CONTENT REPRODUCING (HIGH POWER)

S90 — LOW DENSITY RECORDING/ REPRODUCING (DATA SECTION)

YES — CONTENT REPRODUCING (LOW POWER)

HIGH DENSITY RECORDING/ REPRODUCING (DATA SECTION)

ENTIRE AREA ANNEAL OK

ANNEAL MANAGEMENT INFORMATION UPDATE (ANNEAL DISABLED SECTOR)

MEDIUM EJECTION

MEDIUM EJECTION

NO

YES — ANNEAL MANAGEMENT INFORMATION UPDATE

MEDIUM EJECTION

YES — S94

HIGH DENSITY RECORDING/REPRODUCING (DATA SECTION)

MEDIUM EJECTION

# FIG. 22

| SECTOR NO. 1 | SECTOR NO. 2 | · · · · | SECTOR NO. 65236 | SECTOR NO. 65237 |
|---|---|---|---|---|
| 01 | 10 | · · · · | 00 | 00 |

TOTAL 130474 BITS

# FIG. 23

4

40 ANNEAL MANAGEMENT AREA

42 DATA AREA

# FIG. 24

410 MAGNETO-OPTICAL MARK

414 PHASE PIT SIGNAL

4-1 WOBBLE TRACK

# FIG. 25

100

RESIST
COATING ↓

102
100

EXPOSURE ↓

102
100

DEVELOPMENT ↓

102
100

METAL
PLATING ↓

104
102
100

STRIPPING
PROCESSING ↓

106

SUBSTRATE
MOLDING ↓

106
4A

FILM
DEPOSITION ↓

}4B～4G
4A

COATING ↓

4H
}4B～4G
4A

ANNEAL
MANAGEMENT
INFORMATION
RECORDING ↓

35
4
16
(NA=0.55)

IRRADIATION
LIGHT X
(λ=660nm)

# FIG. 26

# FIG. 27

4H

4G

4K

4J

4I

4A

# FIG. 28

432

418

412

430

414

4-2

4-1

## FIG. 29

## FIG. 30

S100 — MEDIUM
INSERTION

S102 — ANNEAL MANAGEMENT
INFORMATION ACQUISITION

S104 — ENTIRE SURFACE
ANNEALED

YES

NO

S106 — LOW DENSITY RECORDING
SECTION EXISTS

YES

NO

S112 — HIGH DENSITY
RECORDING/
REPRODUCING

MEDIUM
EJECTION

S110 — ENTIRE SURFACE
ANNEAL OK?

NO

YES

ENTIRE SURFACE
ANNEAL PROCESSING

ANNEAL MANAGEMENT
INFORMATION UPDATE

S108 — LOW DENSITY
RECORDING/
REPRODUCING

ANNEAL
MANAGEMENT
INFORMATION
UPDATE

MEDIUM
EJECTION

FIG. 31

412

410

404

402

# FIG. 32

<div align="center">

**INTERNATIONAL SEARCH REPORT**

</div>

| | International application No. |
|---|---|
| | PCT/JP2004/018434 |

A. CLASSIFICATION OF SUBJECT MATTER
Int.Cl⁷ G11B11/105, G11B7/24, G11B7/26

According to International Patent Classification (IPC) or to both national classification and IPC

B. FIELDS SEARCHED

Minimum documentation searched (classification system followed by classification symbols)
Int.Cl⁷ G11B11/105, G11B7/24, G11B7/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-123335 A (Matsushita Electric Industrial Co., Ltd.), 25 April, 2003 (25.04.03), Full text; all drawings (Family: none) | 1-20 |
| A | JP 2002-163849 A (Canon Inc.), 07 June, 2002 (07.06.02), Par. No. [0043] (Family: none) | 1-20 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 January, 2005 (31.01.05) | 15 February, 2005 (15.02.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004018434 W
- JP H11273170 A

- JP H11328678 A

**Non-patent literature cited in the description**

- 15 Gbit/in2 recording on a DWDD disk using a land/groove substrate with a red laser enabled by a side-wall-annealing process. *SPIE (The International Society for Optical Engineering,* vol. 5069